(19) Europäisches Patentamt
European Patent Office
Office européen des brevets

(11) EP 3 154 916 B1

(12) **EUROPÄISCHE PATENTSCHRIFT**

(45) Veröffentlichungstag und Bekanntmachung des Hinweises auf die Patenterteilung:
**12.02.2025 Patentblatt 2025/07**

(21) Anmeldenummer: **15729805.0**

(22) Anmeldetag: **12.06.2015**

(51) Internationale Patentklassifikation (IPC):
***C04B 24/16*** (2006.01) ***C04B 24/24*** (2006.01)
***C04B 24/26*** (2006.01) ***C04B 28/02*** (2006.01)
***C04B 28/04*** (2006.01) ***C04B 28/06*** (2006.01)
***C04B 28/16*** (2006.01) ***C04B 40/00*** (2006.01)

(52) Gemeinsame Patentklassifikation (CPC):
(C-Sets verfügbar)
**C04B 24/165; C04B 24/246; C04B 24/2647; C04B 24/267; C04B 28/02; C04B 28/04; C04B 28/06; C04B 28/065; C04B 28/16; C04B 40/0039; C08F 220/585;** C04B 2103/0079; C04B 2103/0082; C04B 2103/0083; C04B 2111/00517; (Forts.)

(86) Internationale Anmeldenummer:
**PCT/EP2015/063188**

(87) Internationale Veröffentlichungsnummer:
**WO 2015/189396 (17.12.2015 Gazette 2015/50)**

(54) **ANORGANISCHE BINDEMITTELZUSAMMENSETZUNG UMFASSEND EIN COPOLYMER**

INORGANIC BINDING AGENT COMPOSITION COMPRISING A COPOLYMER

COMPOSITION DE LIANT INORGANIQUE COMPRENANT UN COPOLYMÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2014 EP 14172088**

(43) Veröffentlichungstag der Anmeldung:
**19.04.2017 Patentblatt 2017/16**

(73) Patentinhaber: **BASF SE**
**67056 Ludwigshafen am Rhein (DE)**

(72) Erfinder:
- **LANGLOTZ, Björn**
  **83308 Trostberg (DE)**
- **GASTNER, Thomas**
  **84518 Wald (DE)**
- **GÄDT, Torben**
  **83278 Traunstein (DE)**
- **MAZANEC, Oliver**
  **83022 Rosenheim (DE)**
- **SCHINABECK, Michael**
  **83352 Altenmarkt (DE)**
- **EISSMANN, Diana**
  **83342 Tacherting (DE)**
- **FRIEDRICH, Stefan**
  **84518 Garching (DE)**

(74) Vertreter: **BASF IP Association**
**BASF SE**
**GBI - Z078**
**67056 Ludwigshafen (DE)**

(56) Entgegenhaltungen:
**EP-A1- 1 308 427** **WO-A1-2004/099100**
**WO-A2-2010/133527**

EP 3 154 916 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
C04B 2111/00637; C04B 2111/00646;
C04B 2111/00672; C04B 2111/62; C04B 2111/72

C-Sets
**C04B 28/16, C04B 14/06, C04B 24/165,
C04B 24/2647;
C04B 40/0039, C04B 24/165, C04B 2103/406**

## Beschreibung

Die vorliegende Erfindung betrifft Zusammensetzungen umfassend mindestens ein anorganisches Bindemittel und mindestens ein spezifisches wasserlösliches Copolymer. Weiterhin wird ein Verfahren zur Herstellung dieser Zusammensetzung offenbart. Ein weiterer Aspekt der vorliegenden Erfindung ist die Verwendung des spezifischen Copolymers in einer erfindungsgemäßen Zusammensetzung, als rheologisches Additiv.

Wasserlösliche, verdickend wirkende Polymere werden in vielen Bereichen der Technik eingesetzt, beispielsweise im Bereich der Kosmetik, in Lebensmitteln, zur Herstellung von Reinigungsmitteln, Druckfarben, Dispersionsfarben, bei der Erdölförderung oder in der Bauchemie.

Wasserlösliche nicht ionische Abkömmlinge von Polysacchariden, insbesondere Cellulose- und Stärkederivate, werden üblicherweise in wässrigen Baustoffmischungen verwendet, um das unerwünschte Verdunsten des Wassers, das für die Hydratation und Verarbeitbarkeit erforderlich ist zu verhindern sowie die Segregation, Sedimentation und das Bluten (Absetzen von Wasser auf der Oberfläche) des Systems zu kontrollieren.

Gemäß Ullmann's Enzyklopädie der Technischen Chemie (4. Auflage, Band 9, Seiten 208 - 210, Verlag Chemie Weinheim) sind die gebräuchlichsten rheologischen Additive synthetisch erzeugte nichtionische Cellulose- und Stärkederivate wie Methylcellulose (MC), Hydroxyethylcellulose (HEC), Methylhydroxyethylcellulose (MHEC), Methylhydroxypropylcellulose (MHPC). Aber auch mikrobiell erzeugte Polysaccharide wie Welan Gum, Diutan Gum und natürlich vorkommende extraktiv isolierte Polysaccharide (Hydrokollloide), wie Alginate, Xanthane, Carrageenane, Galactomannane usw., werden entsprechend dem Stand der Technik zur Regelung der Rheologie von wässrigen Baustoff- und Anstrichsystemen eingesetzt.

Es sind viele chemisch unterschiedliche Klassen von Polymeren bekannt, welche als rheologischen Additive in wässrigen anorganischen Baustoffmischungen eingesetzt werden können. Eine wichtige Klasse stabilisierend wirkender Polymere sind die sogenannten hydrophob assoziierenden Polymere. Hierunter versteht der Fachmann wasserlösliche Polymere, welche seiten- oder endständig hydrophobe Gruppen aufweisen, wie beispielsweise längere Alkylketten. In wässriger Lösung können derartige hydrophobe Gruppen mit sich selbst oder mit anderen hydrophobe Gruppen aufweisenden Stoffen assoziieren. Hierdurch wird ein assoziatives Netzwerk gebildet, durch das das Medium stabilisiert wird.

EP 705 854 A1, DE 100 37 629 A1 und DE 10 2004 032 304 A1 offenbaren wasserlösliche, hydrophob assoziierende Copolymere und deren Verwendung, beispielsweise im Bereich der Bauchemie. Die beschriebenen Copolymere umfassen saure Monomere wie beispielsweise Acrylsäure, Vinylsulfonsäure, Acrylamidomethylpropansulfonsäure, basische Monomere wie Acrylamid, Dimethylacrylamid oder kationische Gruppen umfassende Monomere, wie beispielsweise Ammoniumgruppen aufweisende Monomere. Derartige Monomere verleihen den Polymeren die Wasserlöslichkeit. Als hydrophob assoziierende Monomere enthalten die offenbarten Copolymere jeweils Monomere des nachfolgenden Typs: $H_2C=C(R^x)-COO-(-CH_2-CH_2-O-)_q-Ry$ oder auch $H_2C=C(R^{\times})-O-(-CH_2-CH_2-O-)_q-R^y$ wobei $R^x$ typischerweise für H oder $CH_3$ und $R^y$ für einen größeren Kohlenwasserstoffrest steht, typischerweise für Kohlenwasserstoffreste mit 8 bis 40 Kohlenstoffatomen. In den Schriften genannt sind beispielsweise längere Alkylgruppen oder auch eine Tristyrylphenylgruppe.

Weiterhin betrifft die US 8,362,180 wasserlösliche Copolymere, welche hydrophob assoziierende Monomere enthalten. Die Monomere umfassen eine ethylenisch ungesättigte Gruppe sowie eine Polyethergruppe mit Blockstruktur aus einem hydrophilen Polyalkylenoxidblock, welcher im Wesentlichen aus Ethylenoxidgruppen besteht, und einem terminalen, hydrophoben Polyalkylenoxidblock, welcher aus Alkylenoxiden mit mindestens 4 Kohlenstoffatomen, bevorzugt mindestens 5 Kohlenstoffatomen besteht.

Weiterhin wird die Verwendung dieser hydrophob assoziierende Copolymere in wässrigen Baustoffzusammensetzungen offenbart.

Aus der WO 2004/099100 sind Zementadditive bekannt, welche ein Polycarbonsäurepolymer mit einer Polyetherseitenkette, welche eine EO/PO/EO-Triblockstruktur aufweist, umfassen. Die EO-Blöcke können 1 bis 200 Wiederholungseinheiten aufweisen, während es sich bei dem PO-Block um eine Alkylenoxideinheit mit 3 bis 18 C-Atomen und 1 bis 50 Wiederholungseinheitenhandelt. In den Beispielen werden Polymere mit einem gewichtsmittleren Molekulargewicht von 8500 bis 40500 g/mol beschrieben. In der Beschreibung wird ein gewichtsmittleres Molekulargewicht der Polycarbonsäurepolymere von nicht mehr als 1.000.000 g/mol offenbart. Die Zementadditive sollen eine hohe Wasserreduktion sowie eine Verbesserung der Viskosität bewirken.

Viele nach dem Stand der Technik bekannten hydrophob assoziierenden Copolymere sind zwar sehr gute Stabilisierer für wässrige anorganische Baustoffzusammensetzungen. Sie haben jedoch den Nachteil, dass sie die Fließfähigkeit der wässrigen anorganischen Baustoffzusammensetzungen verschlechtern.

Der vorliegenden Erfindung lag daher die Aufgabe zugrunde, anorganische Bindemittelzusammensetzungen zur Verfügung zu stellen, welche eine möglichst geringe Neigung zur Sedimentation, Segregation und zum Bluten zeigen und gleichzeitig sehr gute Fließeigenschaften aufweisen.

Gelöst wurde diese Aufgabe durch eine Zusammensetzung umfassend

(α) mindestens ein anorganisches Bindemittel
(β) mindestens ein wasserlösliches Copolymer auf Basis von

(a) 0,1 bis 20 Gew.-% mindestens eines Monomers der Formel (I),

$$H_2C{=}C(R^1)\text{-}R^2O\text{-}(\text{-}CH_2\text{-}CH_2\text{-}O\text{-})_k\text{-}(CH_2\text{-}CH(R^3)\text{-}O\text{-})_1\text{-}(\text{-}CH_2\text{-}CH_2\text{-}O\text{-})_m\text{-}R^4 \qquad (I)$$

wobei die Einheiten $-(-CH_2-CH_2-O-)_k$, $-(-CH_2-CH(R^3)-O-)_l$ und $-(-CH_2-CH_2-O-)_m$ in Blockstruktur in der in Formel (I) dargestellten Reihenfolge angeordnet sind und die Reste die folgenden Bedeutungen haben:

k: ist eine Zahl von 10 bis 150;
l: ist eine Zahl von 5 bis 25;
m: ist eine Zahl von 1 bis 15;
$R^1$: ist H oder Methyl;
$R^2$: ist unabhängig voneinander eine Einfachbindung oder eine zweiwertige, ver knüpfende Gruppe, ausgewählt aus der Gruppe bestehend aus $-(C_nH_{2n})$-und $-O-(C_{n'}H_{2n'})$- und $-C(O)-O-(C_{n''}H_{2n''})$-, wobei n, n' und n" für eine natürliche Zahl von 1 bis 6 steht;
$R^3$: ist ein Kohlenwasserstoffrest mit mindestens 2 Kohlenstoffatomen oder eine Ethergruppe der allgemeinen Formel $-CH_2-O-R^{3'}$, wobei $R^{3'}$ für einen Kohlenwasserstoffrest mit mindestens 2 Kohlenstoffatomen steht und wobei $R^3$ innerhalb der Gruppe $-(-CH_2-CH(R^3)-O-)_l$ gleich oder verschieden sein kann; bevorzugt unter der Maßgabe, dass die Summe der Kohlenstoffatome aller Kohlenwasserstoffreste $R^3$ innerhalb der Gruppe $-(-CH_2-CH(R^3)-O-)_l$ im Bereich von 14 bis 50 liegt;
$R^4$: ist unabhängig voneinander H oder ein Kohlenwasserstoffrest mit 1 bis 4 Kohlenstoffatomen und

(b) 25 bis 99,9 Gew.-% mindestens ein von Monomer (a) verschiedenes monoethylenisch ungesättigtes, hydrophiles Monomer (b),

wobei die Angaben der Gew.-% jeweils auf die Gesamtmenge aller Monomere im Copolymer bezogen sind und das mindestens eine Copolymer ein Molmassenmittel M von 1.500.000 bis 30.000.000 g/mol aufweist, welches nach der Mark-Houwink Beziehung (1) bestimmt wird,

$$M = \left({}^{[\eta]}/_{K}\right)^{1/\alpha} \qquad (1)$$

wobei K = 0,0049, α = 0,8 und [$\eta$] die intrinsische Viskosität darstellen.

Überraschend hat sich hierbei herausgestellt, dass die Copolymere nicht nur die gestellte Aufgabe im vollen Umfang lösen, sondern darüber hinaus auch noch, im Vergleich zum Stand der Technik, häufig in geringeren Dosierungen eingesetzt werden können.

Insbesondere umfasst die erfindungsgemäße Zusammensetzung, bezogen auf deren Trockenmasse, mindestens 20 Gew.-%, bevorzugt mindestens 40 Gew.-%, insbesondere von 30 bis 99,9995 und insbesondere bevorzugt von 35 bis 55 Gew.-% des mindestens einen anorganischen Bindemittels und 0,0005 bis 5 Gew.-%, bevorzugt 0,0005 bis 2 Gew.-%, insbesondere bevorzugt 0,001 bis 1 Gew.-% des mindestens einen Copolymers.

In einer bevorzugten Ausführungsform handelt es sich um Copolymere, worin der Rest k in Monomer (a) gemäß Formel (I) eine Zahl von 23 bis 26 bedeutet.

In einer weiterhin bevorzugten Ausführungsform handelt es sich um Copolymere, worin der Rest l in Monomer (a) gemäß Formel (I) l eine Zahl von 8,5 bis 17,25 bedeutet.

In einer bevorzugten Ausführungsform beträgt die Gesamtsumme der Monomere (a) und (b) im Copolymer 100 Gew.-%.

Bevorzugt handelt es sich bei dem Monomer (a) ausschließlich um ein Monomer der allgemeinen Formel (I) wie oben beschrieben.

Zur Erfindung ist im Einzelnen folgendes auszuführen:
Bei den Copolymeren der Komponente (β) handelt es sich um wasserlösliche Copolymere, welche hydrophobe Gruppen aufweisen. In wässrigen Zusammensetzungen können die hydrophoben Gruppen mit sich selbst oder mit den hydrophoben Gruppen von anderen Stoffen assoziieren und verdicken durch diese Wechselwirkungen die wässrige Zusammensetzung.

Dem Fachmann ist bekannt, dass die Löslichkeit hydrophob assoziierender Copolymere in Wasser je nach der

Art der verwendeten Monomere mehr oder weniger stark vom pH-Wert abhängig sein kann. Bezugspunkt für die Beurteilung der Wasserlöslichkeit soll daher jeweils der für den jeweiligen Einsatzzweck des Copolymers gewünschte pH-Wert sein.

Unter "wasserlösliches Copolymer" im Sinne der vorliegenden Anmeldung werden Copolymere verstanden, welche in Wasser bei 20 °C und Normaldruck und dem pH-Wert der jeweilig betrachteten erfindungsgemäßen Zusammensetzung eine Löslichkeit von mindestens 1 Gramm pro Liter Wasser, insbesondere mindestens 10 Gramm pro Liter Wasser und besonders bevorzugt von mindestens 100 Gramm pro Liter Wasser aufweisen.

Das Copolymer umfasst mindestens ein monoethylenisch ungesättigtes Monomer (a), welches dem Copolymer hydrophob assoziierende Eigenschaften verleiht.

Es handelt es sich bei dem mindestens einen Monomer (a) um ein Monomer der allgemeinen Formel (I)

$$H_2C=C(R^1)-R^2-O-(-CH_2-CH_2-O-)_k-(-CH_2-CH(R^3)-O-)_l-(-CH_2-CH_2-O-)_m-R^4 \qquad (I).$$

Bei den Monomeren (a) der allgemeinen Formel (I) ist eine ethylenische Gruppe $H_2C=C(R^1)$-über eine zweiwertige, verknüpfende Gruppe $-R^2-O-$ mit einem Polyalkylenoxyrest mit Blockstruktur $-(-CH_2-CH_2-O-)_k-(-CH_2-CH(R^3)-O-)_l-(-CH_2-CH_2-O-)_m$ $R^4$ verbunden, wobei die Blöcke $-(-CH_2-CH_2-O-)_k$, $-(-CH_2-CH(R^3)-O-)_l$ und $-(-CH_2-CH_2-O-)_m$ in der in Formel (I) dargestellten Reihenfolge angeordnet sind. Die Monomeren (a) weisen entweder eine terminale OH-Gruppe oder eine terminale Ethergruppe $OR^4$ auf.

In der oben genannten Formel steht $R^1$ für H oder eine Methylgruppe. Bevorzugt handelt es sich bei $R^1$ um H.

$R^2$ steht für eine Einfachbindung oder eine zweiwertige, verknüpfende Gruppe, ausgewählt aus der Gruppe $-(C_nH_{2n})-$, $-O-(C_{n'}H_{2n'})-$ und $-C(O)-O-(C_{n''}H_{2n''})-$. In den genannten Formeln steht n, n' und n" für eine natürliche Zahl von 1 bis 6. Mit anderen Worten gesagt handelt es sich bei der verknüpfenden Gruppe um geradkettige oder verzweigte aliphatische Kohlenwasserstoffgruppen mit 1 bis 6 Kohlenstoffatomen, welche entweder direkt oder über eine Ethergruppe -O-oder eine Carboxylestergruppe -C(O)-O-mit der ethylenischen Gruppe $H_2C=C(R^1)$- verknüpft sind. Bevorzugt handelt es sich bei den Gruppen $-(C_nH_{2n})-$, $-(C_{n'}H_{2n'})-$ und $-(C_{n''}H_{2n''})-$ um lineare aliphatische Kohlenwasserstoffgruppen.

Bevorzugt handelt es sich bei der Gruppe $R^2 = -(C_nH_{2n})-$ um eine Gruppe ausgewählt aus $-CH_2-$, $-CH_2-CH_2-$ und $-CH_2-CH_2-CH_2-$, besonders bevorzugt ist eine Methylengruppe $-CH_2-$.

Bevorzugt handelt es sich bei der Gruppe $R^2 = -O-(C_{n'}H_{2n'})-$ um eine Gruppe ausgewählt aus $-O-CH_2-CH_2-$, $-O-CH_2-CH_2-CH_2-$ und $-O-CH_2-CH_2-CH_2-CH_2-$, besonders bevorzugt ist $-O-CH_2-CH_2-CH_2-CH_2-$.

Bevorzugt handelt es sich bei der Gruppe $R^2 = -C(O)-O-(C_{n''}H_{2n''})-$ um eine Gruppe ausgewählt aus $-C(O)-O-CH_2-$, $-C(O)-O-CH_2-CH_2-$ und $-C(O)-O-CH_2-CH_2-CH_2-$, besonders bevorzugt ist $-C(O)-O-CH_2-CH_2-$.

Insbesondere bevorzugt handelt es sich bei der Gruppe $R^2$ um eine Gruppe $-O-(C_{n'}H_{2n'})-$.

Weiterhin besonders bevorzugt handelt es sich bei $R^2$ um eine Gruppe ausgewählt aus $-CH_2$-oder $-O-CH_2-CH_2-CH_2-CH_2-$ oder $-C(O)-O-CH_2-CH_2-$, ganz besonders bevorzugt ist $-O-CH_2-CH_2-CH_2-CH_2-$.

Die Monomere (a) weisen weiterhin einen Polyalkylenoxyrest auf, der aus den Einheiten $-(-CH_2-CH_2-O-)_k$, $-(-CH_2-CH(R^3)-O-)_l$ und $-(-CH_2-CH_2-O-)_m$ besteht, wobei die Einheiten in Blockstruktur in der in Formel (I) dargestellten Reihenfolge angeordnet sind. Der Übergang zwischen den Blöcken kann abrupt oder auch kontinuierlich erfolgen.

Bei der Anzahl der Ethylenoxyeinheiten k handelt es sich um eine Zahl von 10 bis 150, bevorzugt von 12 bis 50, insbesondere bevorzugt von 15 bis 35 und besonders bevorzugt von 20 bis 30.

Bei der Anzahl der Ethylenoxyeinheiten k handelt es sich ganz besonders bevorzugt um eine Zahl von 23 bis 26. Bei den genannten Zahlen handelt es sich immer um Mittelwerte von Verteilungen.

Beim dem zweiten Block $-(-CH_2-CH(R^3)-O-)_l-$ stehen die Reste $R^3$ unabhängig voneinander für Kohlenwasserstoffstoffreste mit mindestens 2 Kohlenstoffatomen, bevorzugt mit 2 bis 14 Kohlenstoffatomen, insbesondere bevorzugt mit 2 bis 4 und besonders bevorzugt mit 2 oder 3 Kohlenstoffatomen. Es kann sich hierbei um einen aliphatischen und/oder aromatischen, linearen oder verzweigten Kohlenstoffrest handeln. Bevorzugt handelt es sich um aliphatische Reste. Besonders bevorzugt handelt es sich um einen aliphatischen, unverzweigten Kohlenwasserstoffrest mit 2 oder 3 Kohlenstoffatomen. Bei dem genannten Block handelt es sich bevorzugt um einen Polybutylenoxyblock oder um einen Polypentylenoxyblock.

Beispiele geeigneter Reste $R^3$ umfassen Ethyl, n-Propyl, n-Butyl, n-Pentyl, n-Hexyl, n-Heptyl, n-Octyl, n-Nonyl oder n-Decyl, n-Dodecyl, n-Tetradecyl sowie Phenyl.

Beispiele geeigneter Reste $R^3$ umfassen Ethyl, n-Propyl, n-Butyl, n-Pentyl, n-Hexyl, n-Heptyl, n-Octyl, n-Nonyl oder n-Decyl sowie Phenyl. Beispiele bevorzugter Reste umfassen n-Propyl, n-Butyl, n-Pentyl, besonders bevorzugt ist ein Ethylrest oder ein n-Propylrest.

Bei den Resten $R^3$ kann es sich weiterhin um Ethergruppen der allgemeinen Formel $-CH_2-O-R^{3'}$ handeln, wobei es sich bei $R^{3'}$ um einen aliphatischen und/oder aromatischen, linearen oder verzweigten Kohlenwasserstoffrest mit mindestens 2 Kohlenstoffatomen, bevorzugt 2 bis 10 Kohlenstoffatomen und besonders bevorzugt mindestens 3 Kohlenstoffatomen handelt. Beispiele für Reste $R^{3'}$ umfassen n-Propyl, n-Butyl, n-Pentyl, n-Hexyl, 2-Ethylhexyl, n-Heptyl, n-Octyl, n-Nonyl n-Decyl oder Phenyl.

Beispiele für Reste $R^{3'}$ umfassen n-Propyl, n-Butyl, n-Pentyl, n-Hexyl, 2-Ethylhexyl, n-Heptyl, n-Octyl, n-Nonyl n-Decyl, n-Dodecyl, n-Tetradecyl oder Phenyl.

Bei dem Block $-(-CH_2-CH(R^3)-O-)_l-$ handelt es sich also um einen Block, der aus Alkylenoxyeinheiten mit mindestens 4 Kohlenstoffatomen, bevorzugt mit 4 oder 5 Kohlenstoffatomen und/oder Glycidylethern mit einer Ethergruppe von mindestens 2, bevorzugt mindestens 3 Kohlenstoffatomen besteht. Bevorzugt als Reste $R^3$ sind die genannten Kohlenwasserstoffreste; bei den Bausteinen des zweiten Block handelt es sich besonders bevorzugt um mindestens 4 Kohlenstoffatome umfassende Alkylenoxyeinheiten, wie Butylenoxy- und Pentylenoxyeinheiten oder Einheiten höherer Alkylenoxide, ganz besonders bevorzugt handelt es sich um Butylenoxidoder Pentylenoxyeinheiten.

Für den Fachmann auf dem Gebiet der Polyalkylenoxide ist klar, dass die Orientierung der Kohlenwasserstoffreste $R^3$ von den Bedingungen bei der Alkoxylierung abhängen kann, beispielsweise vom zur Alkoxylierung gewählten Katalysator. Die Alkylenoxygruppen können also sowohl in der Orientierung $-(-CH_2-CH(R^3)-O-)-$ oder auch die inverser Orientierung $-(-CH(R^3)-CH_2-O-)-$ in das Monomer eingebaut werden. Die Darstellung in Formel (I) soll daher nicht als auf eine bestimmte Orientierung der Gruppe $R^3$ beschränkt angesehen werden.

Bei der Anzahl der Alkylenoxyeinheiten l handelt es sich um eine Zahl von 5 bis 25, insbesondere von 6 bis 23, besonders bevorzugt von 7 bis 20, ganz besonders bevorzugt von 8,5 bis 17,25. Bevorzugt beträgt die Summe der Kohlenstoffatome in allen Kohlenwasserstoffresten $R^3$ innerhalb der Gruppe $-(-CH_2-CH(R^3)-O-)_l$ von 14 bis 50, bevorzugt von 18 bis 40, insbesondere bevorzugt von 25,5 bis 34,5. Handelt es sich bei den Resten $R^3$ um eine Ethergruppe $-CH_2-O-R^{3'}$, gilt die Maßgabe, dass die Summe der Kohlenwasserstoffreste von $R^{3'}$ innerhalb der Gruppe $-(-CH_2-CH(R^{3'})-O-)_l$ von 14 bis 50, bevorzugt von 18 bis 40, insbesondere bevorzugt von 25,5 bis 34,5, wobei das Kohlenstoffatom der verknüpfenden $-CH_2-O$-Gruppe in $-CH_2-O-R^{3'}$ nicht berücksichtigt wird.

Eine bevorzugte Ausführungsform betrifft ein oben beschriebenes Copolymer umfassend ein Monomer (a), wobei $R^3$ Ethyl ist und l eine Zahl von 7,5 bis 25, bevorzugt von 12,75 bis 25, insbesondere bevorzugt von 13 bis 23, ganz besonders bevorzugt von 12,75 bis 17,25, beispielsweise 14, 16 oder 22 ist.

Bei der Anzahl der Alkylenoxyeinheiten l handelt es sich in einer bevorzugten Ausführungsform um eine Zahl von 8,5 bis 17,25, insbesondere unter der Maßgabe, dass die Summe der Kohlenstoffatome in allen Kohlenwasserstoffresten $R^3$ im Bereich von 25,5 bis 34,5 liegt. Handelt es sich bei den Resten $R^3$ um eine Ethergruppe $-CH_2-O-R^{3'}$, gilt insbesondere die Maßgabe, dass die Summe der Kohlenwasserstoffreste $R^{3'}$ im Bereich von 25,5 bis 34,5 liegt, wobei das Kohlenstoffatom der verknüpfenden $-CH_2-O$-Gruppe in $-CH_2-O-R^{3'}$ nicht berücksichtigt wird. Eine bevorzugte Ausführungsform betrifft ein oben beschriebenes Copolymer umfassend ein Monomer (a), wobei $R^3$ Ethyl ist und l eine Zahl von 12,75 bis 17,25, insbesondere von 13 bis 17, beispielsweise 14 oder 16, ist. Eine weitere bevorzugte Ausführungsform betrifft ein oben beschriebenes Copolymer umfassend ein Monomer (a), wobei $R^3$ n-Propyl ist und l eine Zahl von 8,5 bis 11,5, bevorzugt von 9 bis 11, beispielsweise 10 oder 11, ist. Wie bereits erwähnt handelt es sich bei den genannten Zahlen um Mittelwerte von Verteilungen.

Bei dem Block $-(-CH_2-CH_2-O-)_m$ handelt es sich um einen Polyethylenoxy-Block. Bei der Anzahl der Ethylenoxyeinheiten m handelt es sich um eine Zahl von 1 bis 15, bevorzugt von 0,1 bis 10, besonders bevorzugt von 0,1 bis 5, insbesondere bevorzugt von 0,5 bis 5 und ganz besonders bevorzugt von 2 bis 5. Wiederum handelt es sich bei den genannten Zahlen um Mittelwerte von Verteilungen.

Bei dem Rest $R^4$ handelt es sich um H oder einen bevorzugt aliphatischen Kohlenwasserstoffrest mit 1 bis 4 Kohlenstoffatomen. Bevorzugt handelt es sich bei $R^4$ um H, Methyl oder Ethyl, besonders bevorzugt um H oder Methyl und ganz besonders bevorzugt um H.

Für den Fachmann auf dem Gebiet von Polyalkylenoxy-Blockcopolymeren ist klar, dass der Übergang zwischen den Blöcken je nach der Art der Herstellung abrupt oder auch kontinuierlich erfolgen kann. Bei einem kontinuierlichen Übergang befindet sich zwischen den Blöcken noch eine Übergangzone, welche Monomere beider Blöcke umfasst. Wenn man die Blockgrenze auf die Mitte der Übergangzone festlegt, kann dem entsprechend der erste Block $-(-CH_2-CH_2-O-)_k$ noch geringe Mengen an Einheiten $-(-CH_2-CH(R^3)-O-)-$ und der zweite Block $-(-CH_2-CH(R^3)-O-)_l$ geringe Mengen an Einheiten $-(-CH_2-CH_2-O-)-$ aufweisen, wobei diese Einheiten aber nicht statistisch über den Block verteilt sind, sondern in der genannten Übergangszone angeordnet sind. Insbesondere kann der dritte Block $(-CH_2-CH_2-O-)_m$ geringe Mengen an Einheiten $-(-CH_2-CH(R^3)-O-)-$ aufweisen.

Blockstruktur im Sinne der vorliegenden Erfindung bedeutet, dass die Blöcke zu mindestens 85 mol-%, bevorzugt zu mindestens 90 mol-%, besonders bevorzugt zu mindestens 95 mol-%, bezogen auf die Gesamtstoffmenge des jeweiligen Blocks, aus den entsprechenden Einheiten aufgebaut sind. Dies bedeutet, dass die Blöcke neben den entsprechenden Einheiten geringe Mengen an anderen Einheiten (insbesondere andere Polyalkylenoxyeinheiten) aufweisen können. Insbesondere enthält der Polyethylenoxyblock $-(-CH_2-CH_2-O-)_m$ mindestens 85 mol-%, bevorzugt mindestens 90 mol-%, bezogen auf die Gesamtstoffmenge des Blocks, die Einheit $(-CH_2-CH_2-O-)$. Insbesondere besteht der Polyethylenoxyblock $-(-CH_2-CH_2-O-)_m$ aus 85 bis 95 mol-% der Einheit $(-CH_2-CH_2-O-)$ und aus 5 bis 15 mol-% der Einheit $-(-CH_2-CH(R^3)-O-)$.

Es handelt sich bevorzugt um ein Copolymer, in dem die Reste in Monomer (a) gemäß Formel (I) die folgenden Bedeutungen haben:

k: ist eine Zahl von 15 bis 35, bevorzugt von 20 bis 28, insbesondere von 23 bis 26;
l: ist eine Zahl von 5 bis 25, bevorzugt von 5 bis 23, insbesondere von 5 bis 20;
m: ist eine Zahl von 1 bis 15, bevorzugt von 0,5 bis 10;
$R^1$: ist H;
$R^2$: ist eine zweiwertige, verknüpfende Gruppe $-O-(C_{n'}H_{2n'})-$, wobei n' für 4 steht;
$R^3$: ist, unabhängig voneinander ein Kohlenwasserstoffrest mit 2 Kohlenstoffatomen; insbesondere Ethyl;
$R^4$: ist H.

Bevorzugt handelt es sich um ein Copolymer, in dem die Reste in Monomer (a) gemäß Formel (I) die folgenden Bedeutungen haben:

k: ist eine Zahl von 15 bis 35, bevorzugt von 20 bis 28, besonders bevorzugt von 23 bis 26;
l: ist eine Zahl von 7,5 bis 25, bevorzugt von 10 bis 25, besonders bevorzugt von 12,75 bis 25; insbesondere bevorzugt von 13 bis 23, beispielsweise 14, 16 oder 22;
m: ist eine Zahl von 1 bis 15, bevorzugt von 0,5 bis 10;
$R^1$: ist H;
$R^2$: ist eine zweiwertige, verknüpfende Gruppe $-O-(C_{n'}H_{2n'})-$, wobei n' für 4 steht;
$R^3$: ist, unabhängig voneinander ein Kohlenwasserstoffrest mit 2 Kohlenstoffatomen; insbesondere Ethyl;
$R^4$: ist H.

Bevorzugt handelt es sich um ein Copolymer, in dem die Reste in Monomer (a) gemäß Formel (I) die folgenden Bedeutungen haben:

k: ist eine Zahl von 15 bis 35, bevorzugt von 20 bis 28, bevorzugt von 23 bis 26;
l: ist eine Zahl von 7,5 bis 25, bevorzugt von 10 bis 25, besonders bevorzugt von 12,75 bis 25; insbesondere bevorzugt von 13 bis 23, beispielsweise 14, 16 oder 22;
m: ist eine Zahl von 0,1 bis 10, bevorzugt von 0,5 bis 10, insbesondere bevorzugt von 2 bis 5;
$R^1$: ist H;
$R^2$: ist eine zweiwertige, verknüpfende Gruppe $-O-(C_{n'}H_{2n'})-$, wobei n' für 4 steht;
$R^3$: ist, unabhängig voneinander ein Kohlenwasserstoffrest mit 2 Kohlenstoffatomen; insbesondere Ethyl;
$R^4$: ist H.

Bevorzugt handelt es sich um ein Copolymer, in dem die Reste in Monomer (a) gemäß Formel (I) die folgenden Bedeutungen haben:

k: ist eine Zahl von 23 bis 26;
l: ist eine Zahl von 12,75 bis 17,25;
m: ist eine Zahl von 1 bis 15; bevorzugt von 0,5 bis 10;
$R^1$: ist H;
$R^2$: ist eine zweiwertige, verknüpfende Gruppe $-O-(C_{n'}H_{2n'})-$, wobei n' für 4 steht;
$R^3$: ist, unabhängig voneinander ein Kohlenwasserstoffrest mit 2 Kohlenstoffatomen; insbesondere Ethyl;
$R^4$: ist H.

Insbesondere handelt es sich um ein Copolymer in dem die Reste in Monomer (a) gemäß Formel (I) die folgenden Bedeutungen haben:

k: ist eine Zahl von 23 bis 26;
l: ist eine Zahl von 8,5 bis 11,5;
m: ist eine Zahl von 1 bis 15, bevorzugt von 0,5 bis 10;
$R^1$: ist H;
$R^2$: ist eine zweiwertige, verknüpfende Gruppe $-O-(C_{n'}H_{2n'})-$, wobei n' für 4 steht;
$R^3$: ist ein Kohlenwasserstoffrest mit 3 Kohlenstoffatomen, insbesondere n-Propyl;
$R^4$: ist H.

In einer besonders bevorzugten Ausführungsform handelt es sich umCopolymere, deren Reste in Monomer (a) gemäß Formel (I) die folgende Bedeutung haben:

k: ist eine Zahl von 23 bis 26;

l: ist eine Zahl von 12,75 bis 17,25;
m: ist eine Zahl von 2 bis 5;
$R^1$: ist H;
$R^2$: ist eine zweiwertige, verknüpfende Gruppe $-O-(C_{n'}H_{2n'})-$, wobei n' für 4 steht,
$R^3$: ist ein Kohlenwasserstoffrest mit 2 Kohlenstoffatomen;
$R^4$: ist H.

Weiterhin bevorzugt betrifft die Erfindung Zusammensetzungen, welche eine Copolymer umfasst, in dem neben dem Monomer (a) der Formel (I) ein Monomer (d) der Formel (III) vorliegt

$$H_2C=C(R^1)-R^LO-(-CH_2-CH_2-O-)_k-(-CH_2-CH(R^3)-O-)_l-H \quad (III)$$

wobei die Reste $R^1$, $R^2$, $R^3$, k und l die oben definierten Bedeutungen haben;
Weiterhin bevorzugt handelt es sich um ein Copolymer, in welchem das Gewichtsverhältnis des Monomers (a) der Formel (I) mit dem Monomer (d) der Formel (III) im Bereich von 19 : 1 bis 1 : 19, bevorzugt im Bereich von 9 : 1 bis 1 : 9 liegt.

Ein weiterer Gegenstand der vorliegenden Anmeldung ist ein Verfahren zur Herstellung einer erfindungsgemäßen Zusammensetzung wobei das Monomer (a) der allgemeinen Formel (I) durch ein Verfahren umfassend die folgenden Schritte hergestellt wird:

a) Umsetzen eines monoethylenisch ungesättigten Alkohols A1 der allgemeinen Formel (II)

$$H_2C=C(R^1)-R^2-OH \quad (II),$$

mit Ethylenoxid,
wobei die Reste $R^1$ und $R^2$ die oben definierten Bedeutungen haben;
unter Zugabe eines alkalischen Katalysators K1 enthaltend KOMe und/oder NaOMe; wobei ein alkoxylierter Alkohol A2 erhalten wird;

b) Umsetzen des alkoxylierten Alkohols A2 mit mindestens einem Alkylenoxid Z der Formel (Z)

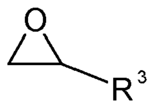
(Z)

wobei $R^3$ die oben definierte Bedeutung hat;
unter Zugabe eines alkalischen Katalysators K2;
wobei die Konzentration an Kalium-Ionen bei der Umsetzung in Schritt b) kleiner oder gleich 0,9 mol-% bezogen auf den eingesetzten Alkohol A2 beträgt;
und wobei die Umsetzung in Schritt b) bei einer Temperatur von kleiner oder gleich 135°C durchgeführt wird, wobei ein alkoxylierter Alkohol A3 gemäß der Formel (III) erhalten wird,

$$H_2C=C(R^1)-R^2-O-(-CH_2-CH_2-O-)_k-(-CH_2-CH(R^3)-O-)_l-H \quad (III)$$

wobei die Reste $R^1$, $R^2$, $R^3$, k und l die oben definierten Bedeutungen haben;

c) Umsetzen des Alkohols A3 mit Ethylenoxid; wobei ein alkoxylierter Alkohol A4 erhalten wird, der dem Monomer (a) gemäß Formel (I) mit $R^4$ = H und m = 1 bis 15 entspricht;

d) optional Verethern des alkoxylierten Alkohols A4 mit einer Verbindung

$$R^4-X$$

wobei $R^4$ ein Kohlenwasserstoffrest mit 1 bis 4 Kohlenstoffatomen und X eine Abgangsgruppe, bevorzugt

ausgewählt aus der Gruppe von Cl, Br, I, $-O-SO_2-CH_3$ (Mesylat), $-O-SO_2-CF_3$ (Triflat) und $-O-SO_2-OR^4$ ist; wobei ein Monomer (a) gemäß Formel (I) mit $R^4$ = Kohlenwasserstoffrest mit 1 bis 4 Kohlenstoffatomen erhalten wird,

radikalische Polymerisation des erhaltenen Monomeren (a) mit einem Monomeren (b), wobei das wasserlösliche Copolymer (β) erhalten wird und in Kontakt bringen des wasserlöslichen Copolymers (β) mit dem mindestens einem anorganischen Bindemittel.

Schritt a) des erfindungsgemäßen Verfahrens umfasst die Umsetzung eines monoethylenisch ungesättigten Alkohols A1 mit Ethylenoxid unter Zugabe eines alkalischen Katalysators K1 enthaltend KOMe (Kaliummethanolat) und/oder NaOMe (Natriummethanolat), wobei ein alkoxylierter Alkohol A2 erhalten wird.

Die im Folgenden genannten bevorzugten Bedingungen (z.B. Druck- und/oder Temperaturbereiche) bei den Umsetzungen gemäß Schritt a), b), c) und optional d) bedeuten, dass der jeweilige Schritt ganz oder teilweise bei den angegebenen Bedingungen durchgeführt wird.

Bevorzugt umfasst Schritt a) zunächst die Umsetzung des monoethylenisch ungesättigten Alkohols A1 mit dem alkalischen Katalysator K1. Typischerweise wird dazu der als Ausgangsmaterial verwendete Alkohol A1 in einem Druckreaktor mit einem alkalischen Katalysator K1 versetzt. Durch verminderten Druck von typischerweise kleiner 100 mbar, bevorzugt im Bereich von 50 bis 100 mbar und/oder Erhöhung der Temperatur typischerweise auf 30 bis 150°C können noch in der Mischung vorhandenes Wasser und/oder Niedrigsieder abgezogen werden. Der Alkohol liegt danach im Wesentlichen als entsprechendes Alkoholat vor. Anschließend wird das Reaktionsgemisch typischerweise mit Inertgas (z.B. Stickstoff) behandelt.

Weiterhin bevorzugt umfasst Schritt a) zunächst die Umsetzung des monoethylenisch ungesättigten Alkohols A1 mit dem alkalischen Katalysator K1. Typischerweise wird dazu der als Ausgangsmaterial verwendete Alkohol A1 in einem Druckreaktor mit einem alkalischen Katalysator K1 versetzt. Durch verminderten Druck von typischerweise kleiner 100 mbar, bevorzugt im Bereich von 30 bis 100 mbar und/oder Erhöhung der Temperatur typischerweise auf 30 bis 150°C können noch in der Mischung vorhandenes Wasser und/oder Niedrigsieder abgezogen werden. Der Alkohol liegt danach im Wesentlichen als entsprechendes Alkoholat vor. Anschließend wird das Reaktionsgemisch typischerweise mit Inertgas (z.B. Stickstoff) behandelt.

Bevorzugt umfasst Schritt a) die Zugabe von Ethylenoxid zu der oben beschriebenen Mischung aus Alkohol A1 mit dem alkalischen Katalysator K1 (wie oben beschrieben). Nach Beendigung der Zugabe von Ethylenoxid lässt man das Reaktionsgemisch typischerweise nachreagieren. Die Zugabe und/oder Nachreaktion erfolgt typischerweise über einen Zeitraum von 2 bis 36 h, bevorzugt von 5 bis 24 h, insbesondere bevorzugt von 5 bis 15 h, besonders bevorzugt von 5 bis 10 h.

Weiterhin bevorzugt umfasst Schritt a) die Zugabe von Ethylenoxid zu der oben beschriebenen Mischung aus Alkohol A1 mit dem alkalischen Katalysator K1 (wie oben beschrieben). Nach Beendigung der Zugabe von Ethylenoxid lässt man das Reaktionsgemisch typischerweise nachreagieren. Die Nachreaktion erfolgt typischerweise über einen Zeitraum von 0,1 bis 1 h. Die Zugabe inklusive optionaler Entspannung (zwischenzeitliche Reduzierung des Druckes von beispielsweise 6 auf 3 bar absolut) und inklusive Nachreaktion erfolgt beispielsweise über einen Zeitraum von 2 bis 36 h, bevorzugt von 5 bis 24 h, insbesondere bevorzugt von 5 bis 15 h, besonders bevorzugt von 5 bis 10 h.

Schritt a) erfolgt typischerweise bei Temperaturen von 60 bis 180°C, bevorzugt von 130 bis 150°C, besonders bevorzugt von 140 bis 150°C. Insbesondere umfasst Schritt a) die Zugabe des Ethylenoxids zu der Mischung aus Alkohol A1 mit dem alkalischen Katalysator K1 bei einer Temperatur von 60 bis 180°C, bevorzugt von 130 bis 150°C, besonders bevorzugt von 140 bis 150°C.

Bevorzugt erfolgt die Zugabe des Ethylenoxids zu der Mischung aus Alkohol A1 und alkalischem Katalysator K1 bei einem Druck im Bereich von 1 bis 7 bar, bevorzugt im Bereich von 1 bis 5 bar. Um den sicherheitstechnischen Vorgaben gerecht zu werden wird die Zugabe in Schritt a) typischerweise bei einem Druck im Bereich von 1 bis 3,1 bar durchgeführt. Insbesondere werden die Zugabe an Ethylenoxid und/oder die Nachreaktion bei den oben genannten Bedingungen durchgeführt.

Weiterhin bevorzugt erfolgt die Zugabe des Ethylenoxids zu der Mischung aus Alkohol A1 und alkalischem Katalysator K1 bei einem Druck im Bereich von 1 bis 7 bar, bevorzugt im Bereich von 1 bis 6 bar. Um den sicherheitstechnischen Vorgaben gerecht zu werden, wird die Zugabe in Schritt a) typischerweise bei einem Druck im Bereich von 1 bis 4 bar, bevorzugt 1 bis 3,9 bar, besonders bevorzugt von 1 bis 3,1 bar oder in einer weiteren Ausführungsform der Erfindung von 3 bis 6 bar, durchgeführt. Insbesondere werden die Zugabe an Ethylenoxid und/oder die Nachreaktion bei den oben genannten Bedingungen durchgeführt.

Bevorzugt umfasst Schritt a) die Zugabe des Ethylenoxids zu einer Mischung aus Alkohol A1 und alkalischem Katalysator K1 über einen Zeitraum von kleiner oder gleich 36 h, bevorzugt kleiner oder gleich 32 h, besonders bevorzugt über einen Zeitraum von 2 bis 32 h, und bei einem Druck von kleiner oder gleich 5 bar, bevorzugt 1 bis 4 bar, insbesondere bevorzugt bei 1 bis 3,9 bar und insbesondere bei 1 bis 3,1 bar. Insbesondere umfasst der oben angegebene Zeitraum die Zugabe an Ethylenoxid und/oder die Nachreaktion.

Insbesondere kann die Umsetzung eines monoethylenisch ungesättigten Alkohols A1 mit Ethylenoxid unter Zugabe eines alkalischen Katalysators K1 enthaltend KOMe (Kaliummethanolat) und/oder NaOMe (Natriummethanolat) gemäß Schritt a) des erfindungsgemäßen Verfahrens in einem oder mehreren Ethoxylierungsschritten erfolgen. Bevorzugt ist ein Verfahren wie oben beschrieben, wobei Schritt a) folgende Schritte umfasst:
Umsetzung des monoethylenisch ungesättigten Alkohols A1 mit dem alkalischen Katalysator K1, Umsetzung der Mischung aus Alkohol A1 und Katalysator K1 mit einem Teil des Ethylenoxids, insbesondere 10 bis 50 Gew.-%, insbesondere 10 bis 30 Gew.-%, der Gesamtmenge an Ethylenoxid, einen Zwischenschritt umfassend eine Ruhephase und/oder eine Druckentspannung und die Umsetzung mit dem verbleibenden Teil des Ethylenoxids.
Weiterhin bevorzugt ist ein Verfahren wie oben beschrieben, wobei Schritt a) die folgenden Schritte umfasst:

Umsetzung des monoethylenisch ungesättigten Alkohols A1 mit dem alkalischen Katalysator K1, Umsetzung der Mischung aus Alkohol A1 und Katalysator K1 mit einem Teil des Ethylenoxids, insbesondere 50 bis 98 Gew.-%, insbesondere 80 bis 98 Gew.-%, der Gesamtmenge an Ethylenoxid,

einen Schritt zur Entfernung von Niedrigsiedern unter Druckentspannung auf einen Druck kleiner 100 mbar, bevorzugt 50 bis 100 mbar und/oder Erhöhung der Temperatur typischerweise im Bereich von 30 bis 150°C,

Umsetzung des erhaltenen Ethoxylierungsproduktes mit dem alkalischen Katalysators K1 und Umsetzung des verbleibenden Teils des Ethylenoxids mit der Mischung aus Ethoxylierungsprodukt und alkalischem Katalysator K1.

Weiterhin bevorzugt ist ein Verfahren wie oben beschrieben, wobei Schritt a) die folgenden Schritte umfasst:

Umsetzung des monoethylenisch ungesättigten Alkohols A1 mit dem alkalischen Katalysator K1, Umsetzung der Mischung aus Alkohol A1 und Katalysator K1 mit einem Teil des Ethylenoxids, insbesondere 50 bis 98 Gew.-%, insbesondere 80 bis 98 Gew.-%, der Gesamtmenge an Ethylenoxid,

einen Schritt zur Entfernung von Niedrigsiedern unter Druckentspannung auf einen Druck kleiner 100 mbar, bevorzugt 30 bis 100 mbar und/oder Erhöhung der Temperatur typischerweise im Bereich von 30 bis 150°C,

Umsetzung des erhaltenen Ethoxylierungsproduktes mit dem alkalischen Katalysators K1 und Umsetzung des verbleibenden Teils des Ethylenoxids mit der Mischung aus Ethoxylierungsprodukt und alkalischem Katalysator K1.

Der alkalische Katalysator K1 enthält insbesondere 10 bis 100 Gew.-% KOMe und/oder NaOMe, bevorzugt 20 bis 90 Gew.-%. Der Katalysator K1 kann neben KOMe und/oder NaOMe weitere alkalische Verbindungen und/oder ein Lösungsmittel (insbesondere ein C1- bis C6-Alkohol) enthalten. Beispielsweise kann eine Verbindung enthalten sein ausgewählt aus Alkalimetallhydroxiden, Erdalkalimetallhydroxiden, Alkalimetallalkanolaten (C2- bis C6-Kaliumalkanolate, C2- bis C6-Natriumalkanolate, bevorzugt Ethanolat), Erdalkalialkanolaten (insbesondere C1- bis C6-Alkanolate, bevorzugt Methanolat und/oder Ethanolat). Bevorzugt enthält der Katalysator K1 neben KOMe und/oder NaOMe mindestens eine weitere alkalische Verbindung ausgewählt aus Natriumhydroxid und Kaliumhydroxid. In einer anderen bevorzugten Ausführungsform besteht der alkalische Katalysator K1 aus KOMe oder aus einer Mischung von KOMe und Methanol (MeOH). Typischerweise kann eine Lösung von 20 bis 50 Gew.-% KOMe in Methanol (MeOH) eingesetzt werden.
In einer weiteren bevorzugten Ausführungsform besteht der alkalische Katalysator K1 aus NaOMe oder aus einer Mischung von NaOMe und Methanol (MeOH). Typischerweise kann eine Lösung von 20 bis 50 Gew.-% NaOMe in Methanol (MeOH) eingesetzt werden.
In einer weiteren bevorzugten Ausführungsform besteht der alkalische Katalysator K1 aus einer Mischung von KOMe und NaOMe oder einer Lösung von KOMe und NaOME in Methanol.
Wird bei der Umsetzung in Schritt a) KOMe als basischer Katalysator K1 eingesetzt, ist es vorteilhaft, K1 in einer solchen Menge einzusetzen, dass eine Obergrenze von 2.500 ppm (ca. 0,4 mol-%) KOMe in Bezug auf den eingesetzten Alkohol A1 eingehalten wird, um die Zersetzung des monoethylenisch ungesättigten Alkohols A1 zu vermeiden. Bevorzugt beträgt die Konzentration an Kalium-Ionen in Schritt a) kleiner oder gleich 0,4 mol-% bezogen auf die Gesamtmenge des eingesetzten Alkohols A1, besonders bevorzugt 0,1 bis 0,4 mol-%.
Wird KOMe in einer solchen Menge zugegeben, dass die Konzentration über 0,9 mol-% bezogen auf den ethoxylierten Alkohol A2 (Produkt des Verfahrensschritts a)) liegt, so muss KOMe vor Schritt b) ganz oder teilweise abgetrennt werden, um eine Kalium-Ionen-Konzentration von weniger als 0,9 mol-% in Verfahrensschritt b) zu erhalten. Dies kann beispielsweise erfolgen indem der ethoxyliert Alkohol A2 nach Schritt a) isoliert und optional gereinigt wird.
In einer weiteren bevorzugten Ausführungsform wird KOMe in einer solchen Menge eingesetzt, dass die Konzentration an Kalium-Ionen nach der Umsetzung in Schritt a) bereits kleiner oder gleich 0,9 mol-% bezogen auf

A2 beträgt.

Schritt b) des erfindungsgemäßen Verfahrens umfasst die Umsetzung des ethoxylierten Alkohols A2 mit mindestens einem Alkylenoxid Z unter Zugabe eines alkalischen Katalysators K2, wobei ein alkoxylierte Alkohol A3 erhalten wird, der dem Monomer (a) gemäß Formel (III)

$$H_2C{=}C(R^1)\text{-}R^2\text{-}O\text{-}(\text{-}CH_2\text{-}CH_2\text{-}O\text{-})_k\text{-}(\text{-}CH_2\text{-}CH(R^3)\text{-}O\text{-})_l\text{-}R^4 \qquad \text{(III)}$$

mit $R^4$ = H entspricht.

Bevorzugt umfasst Schritt b) zunächst die Umsetzung des ethoxylierten Alkohols A2 mit dem alkalischen Katalysator K2. Typischerweise wird dazu der Alkohol A2 in einem Druckreaktor mit dem alkalischen Katalysator K2 versetzt. Durch verminderten Druck von typischerweise kleiner 100 mbar, bevorzugt im Bereich von 50 bis 100 mbar, und/oder Erhöhung der Temperatur, typischerweise im Bereich von 30 bis 150°C, können noch in der Mischung vorhandenes Wasser und/oder Niedrigsieder abgezogen werden. Der Alkohol liegt danach im Wesentlichen als entsprechendes Alkoholat vor. Anschließend wird das Reaktionsgemisch typischerweise mit Inertgas (z.B. Stickstoff) behandelt.

Weiterhin bevorzugt umfasst Schritt b) zunächst die Umsetzung des ethoxylierten Alkohols A2 mit dem alkalischen Katalysator K2. Typischerweise wird dazu der Alkohol A2 in einem Druckreaktor mit dem alkalischen Katalysator K2 versetzt. Durch verminderten Druck von typischerweise kleiner 100 mbar, bevorzugt im Bereich von 30 bis 100 mbar, und/oder Erhöhung der Temperatur, typischerweise im Bereich von 30 bis 150°C, können noch in der Mischung vorhandenes Wasser und/oder Niedrigsieder abgezogen werden. Der Alkohol liegt danach im Wesentlichen als entsprechendes Alkoholat vor. Anschließend wird das Reaktionsgemisch typischerweise mit Inertgas (z.B. Stickstoff) behandelt.

Bevorzugt umfasst Schritt b) die Zugabe des mindestens einen Alkylenoxids Z zu der oben beschriebenen Mischung aus Alkohol A2 mit alkalischem Katalysator K2. Nach Beendigung der Zugabe des Alkylenoxids Z lässt man das Reaktionsgemisch typischerweise nachreagieren. Die Zugabe und/oder Nachreaktion erfolgt typischerweise über einen Zeitraum von 2 bis 36 h, bevorzugt von 5 bis 24 h, insbesondere bevorzugt von 5 bis 20 h, besonders bevorzugt von 5 bis 15 h.

Bevorzugt umfasst Schritt b) die Zugabe des mindestens einen Alkylenoxids Z zu der oben beschriebenen Mischung aus Alkohol A2 mit alkalischem Katalysator K2. Nach Beendigung der Zugabe des Alkylenoxids Z lässt man das Reaktionsgemisch typischerweise nachreagieren. Die Zugabe inklusive optionaler Entspannung und inklusive Nachreaktion erfolgt typischerweise über einen Zeitraum von 2 bis 36 h, bevorzugt von 5 bis 30 h, insbesondere bevorzugt von 10 bis 28 h, besonders bevorzugt von 11 bis 24 h.

Erfindungsgemäß beträgt die Konzentration an Kalium-Ionen bei der Umsetzung in Schritt b) kleiner oder gleich 0,9 mol-%, bevorzugt kleiner 0,9 mol-%, bevorzugt von 0,01 bis 0,9 mol-%, besonders bevorzugt von 0,1 bis 0,6 mol-%, bezogen auf den eingesetzten Alkohol A2. Bevorzugt beträgt bei der Herstellung von Monomer (a) die Konzentration an Kalium-Ionen bei der Umsetzung in Schritt b) 0,01 bis 0,5 mol-%, bezogen auf den eingesetzten Alkohol A2.

In einer besonders bevorzugten Ausführungsform beträgt die Konzentration an Kalium-Ionen bei der Umsetzung in Schritt b) 0,1 bis 0,5 mol-% und die Umsetzung in Schritt b) wird bei Temperaturen von 120 bis 130°C durchgeführt.

Der alkalischer Katalysator K2 enthält bevorzugt mindestens eine alkalische Verbindung ausgewählt aus Alkalimetallhydroxiden, Erdalkalimetallhydroxiden, Alkalimetallalkanolaten (insbesondere C1- bis C6-Alkanolaten, bevorzugt Methanolat und/oder Ethanolat), Erdalkalialkanolaten (insbesondere C1- bis C6-Alkanolate, bevorzugt Methanolat und/oder Ethanolat). Bevorzugt enthält der Katalysator mindestens eine basische Natrium-Verbindung, insbesondere ausgewählt aus NaOH, NaOMe, und NaOEt, besonders bevorzugt NaOMe oder NaOH. Als Katalysator K2 kann eine Mischung der genannten alkalischen Verbindungen eingesetzt werden, bevorzugt besteht der Katalysator K2 aus einer der genannten basischen Verbindungen oder Mischungen der genannten alkalischen Verbindungen. Häufig wird eine wässrige Lösung der alkalischen Verbindungen eingesetzt. In einer anderen bevorzugten Ausführungsform besteht der alkalische Katalysator K2 aus NaOMe oder aus einer Mischung von NaOMe und Methanol. Typischerweise kann eine Lösung von 20 bis 50 Gew.-% NaOMe in Methanol eingesetzt werden. Bevorzugt enthält der Katalysator K2 kein KOMe.

Bevorzugt wird bei der Herstellung in Schritt b) ein Katalysator K2 enthaltend mindestens eine basische Natrium-Verbindung, insbesondere ausgewählt aus NaOH, NaOMe, und NaOEt, eingesetzt, wobei die Konzentration an Natrium-Ionen bei der Umsetzung in Schritt b) 3,5 bis 12 mol-%, bevorzugt 3,5 bis 7 mol-%, besonders bevorzugt 4 bis 5,5 mol-% bezogen auf den eingesetzten Alkohol A2 beträgt.

Erfindungsgemäß wird die Umsetzung in Schritt b) bei einer Temperatur von kleiner oder gleich 135°C durchgeführt. Bevorzugt wird die Umsetzung in Schritt b) bei Temperaturen von 60 bis 135°C, bevorzugt bei 100 bis 135°C, besonders bevorzugt bei 120 bis 130°C durchgeführt. Insbesondere umfasst Schritt b) die Zugabe des mindestens einen Alkylenoxids Z zu einer Mischung aus Alkohol A2 mit alkalischem Katalysator K2 bei einer Temperatur von kleiner oder gleich 135°C, bevorzugt bei Temperaturen von 60 bis 135°C, besonders bevorzugt bei 100 bis 135°C, besonders

bevorzugt bei 120 bis 135°C.

Bevorzugt wird Schritt b) bei einem Druck im Bereich von 1 bis 3,1 bar, bevorzugt von 1 bis 2,1 bar durchgeführt. Um den sicherheitstechnischen Bedingungen gerecht zu werden, wird die Umsetzung in Schritt b) bevorzugt bei einem Druck im Bereich kleiner oder gleich 3,1 bar (bevorzugt 1 bis 3,1 bar) durchgeführt, falls $R^3$ für einen Kohlenwasserstoffrest mit 2 Kohlenstoffatomen steht, oder bei einem Druck von kleiner oder gleich 2,1 bar, bevorzugt 1 bis 2,1 bar durchgeführt, falls $R^3$ für einen Kohlenwasserstoffrest mit mehr als 2 Kohlenstoffatomen steht.

Weiterhin bevorzugt wird Schritt b) bei einem Druck im Bereich von 1 bis 6 bar, bevorzugt von 1 bis 3,1 bar, insbesondere bevorzugt von 1 bis 2,1 bar durchgeführt. Bevorzugt wird die Umsetzung in Schritt b) bei einem Druck im Bereich von 1 bis 6 bar, bevorzugt von 1 bis 3,1 bar, bevorzugt von 4 bis 6 bar durchgeführt, falls $R^3$ für einen Kohlenwasserstoffrest mit 2 Kohlenstoffatomen steht. Insbesondere werden die Zugabe an Alkylenoxid Z und/oder die Nachreaktion bei den oben genannten Drücken durchgeführt.

Insbesondere handelt es sich um ein Copolymer, wobei $R^3$ für einen Kohlenwasserstoffrest mit 2 Kohlenstoffatomen steht und bei der Herstellung von Monomer (a) Schritt b) bei einem Druck im Bereich von 1 bis 3,1 bar durchgeführt wird; oder wobei $R^3$ für einen Kohlenwasserstoffrest mit mindestens 3 Kohlenstoffatomen, bevorzugt mit 3 Kohlenstoffatomen steht und bei der Herstellung von Monomer (a) Schritt b) bei einem Druck von 1 bis 2,1 bar durchgeführt wird.

Insbesondere werden die Zugabe an Alkylenoxid Z und/oder die Nachreaktion bei dem oben genannten Druck durchgeführt. Bevorzugt umfasst Schritt b) die Zugabe des mindestens einen Alkylenoxids Z zu einer Mischung aus Alkohol A2 und alkalischem Katalysator K2 bei einem Druck im Bereich kleiner oder gleich 3,1 bar (bevorzugt 1 bis 3,1 bar), falls $R^3$ für einen Kohlenwasserstoffrest mit 2 Kohlenstoffatomen steht, oder bei einem Druck von kleiner oder gleich 2,1 bar, bevorzugt 1 bis 2,1 bar, falls $R^3$ für einen Kohlenwasserstoffrest mit mindestens 3 Kohlenstoffatomen steht.

Bevorzugt umfasst Schritt b) die Zugabe des mindestens einen Alkylenoxids Z zu einer Mischung aus Alkohol A2 mit alkalischen Katalysator K2 über einen Zeitraum von kleiner oder gleich 36 h, bevorzugt kleiner oder gleich 32 h, besonders bevorzugt über einen Zeitraum von 2 bis 32 h, ganz besonders bevorzugt über einen Zeitraum von 5 bis 24 h, und bei einem Druck von kleiner oder gleich 3,1 bar, bevorzugt bei 1 bis 2,1 bar, weiterhin bevorzugt bei den oben genannten Drücken.

Weiterhin bevorzugt umfasst Schritt b) die Zugabe des mindestens einen Alkylenoxids Z zu einer Mischung aus Alkohol A2 mit alkalischen Katalysator K2 über einen Zeitraum von kleiner oder gleich 36 h, bevorzugt kleiner oder gleich 32 h, besonders bevorzugt über einen Zeitraum von 2 bis 32 h, ganz besonders bevorzugt über einen Zeitraum von 11 bis 24 h, und bei einem Druck von kleiner oder gleich 3,1 bar, weiterhin bevorzugt bei den oben genannten Drücken.

Besonders bevorzugt wird Schritt b) bei einem Druck im Bereich von 1 bis 3,1 bar, bevorzugt bei den oben genannten Drücken und bei einer Temperatur von 120 bis 130°C durchgeführt.

Das erfindungsgemäße Verfahren umfasst weiterhin den Schritt c), wobei der alkoxylierte Alkohols A3 mit Ethylenoxid umgesetzt wird; wobei ein alkoxylierter Alkohol A4 erhalten wird, der dem Monomer (a) gemäß der Formel (I) mit $R^4$ = H und m = 1 bis 15, bevorzugt 1 bis 10, besonders bevorzugt 0,1 bis 10, insbesondere 0,1 bis 5, insbesondere bevorzugt 0,5 bis 5 und ganz besonders bevorzugt 0,5 bis 2,5, entspricht.

Der Schritt c) erfolgt insbesondere ohne weitere Zugabe eines alkalischen Katalysators. Der Schritt c) wird insbesondere bei einem Druck im Bereich von 1 bis 7 bar, bevorzugt von 1 bis 5 bar, und einer Temperatur im Bereich von 60 bis 140°C, bevorzugt von 120 bis 140°C, besonders bevorzugt von 125 bis 135°C, durchgeführt. Die Ethoxylierung im Schritt c) erfolgt insbesondere über einen Zeitraum von 0,5 bis 7 h, insbesondere 0,5 bis 5 h, bevorzugt von 0,5 bis 4 h.

Der Schritt c) erfolgt weiterhin bevorzugt ohne weitere Zugabe eines alkalischen Katalysators. Der Schritt c) wird insbesondere bei einem Druck im Bereich von 1 bis 7 bar, bevorzugt von 1 bis 6 bar, und einer Temperatur im Bereich von 60 bis 140°C, bevorzugt von 120 bis 140°C, besonders bevorzugt von 120 bis 135°C, durchgeführt. Die Ethoxylierung im Schritt c) erfolgt insbesondere über einen Zeitraum von 0,5 bis 7 h, insbesondere 1 bis 5 h, bevorzugt von 1 bis 4 h.

Bevorzugt umfasst der Schritt c) die Zugabe von Ethylenoxid zu der Reaktionsmischung nach Schritt b) enthaltend den alkoxylierten Alkohol A3 gemäß Formel (III) ohne weitere Aufarbeitung und/oder Druckentspannung. Nach Beendigung der Zugabe des Ethylenoxids lässt man das Reaktionsgemisch typischerweise nachreagieren. Die Zugabe und/oder Nachreaktion erfolgt typischerweise über einen Zeitraum von 0,5 bis 10 h, insbesondere 0,5 bis 7 h, insbesondere 0,5 bis 5 h, bevorzugt von 0,5 bis 4 h.

Weiterhin bevorzugt umfasst der Schritt c) die Zugabe von Ethylenoxid zu der Reaktionsmischung nach Schritt b) enthaltend den alkoxylierten Alkohol A3 gemäß Formel (III) ohne weitere Aufarbeitung und/oder Druckentspannung. Nach Beendigung der Zugabe des Ethylenoxids lässt man das Reaktionsgemisch typischerweise nachreagieren. Die Zugabe inklusive optionaler Entspannung sowie inklusive Nachreaktion erfolgt typischerweise über einen Zeitraum von 0,5 bis 10 h, insbesondere 2 bis 10 h, insbesondere 4 bis 8 h.

Das erfindungsgemäße Verfahren kann optional den Schritt d) umfassen, wobei der alkoxylierte Alkohol A4 mit einer Verbindung $R^4$-X verethert wird, wobei X eine Abgangsgruppe, bevorzugt ausgewählt aus Cl, Br, I, $-O-SO_2-CH_3$ (Mesylat), $-O-SO_2-CF_3$ (Triflat) oder $-O-SO_2-CR^4$ ist.

Sofern der alkoxylierte Alkohol A4 der Formel (I) mit einer terminalen OH-Gruppe (d.h. $R^4$ = H) verethert werden soll, kann dies auch mit, dem Fachmann prinzipiell bekannten, üblichen Alkylierungsmitteln erfolgen, beispielsweise

Alkylsulfaten und/oder Alkylhalogeniden. Typischerweise kann es sich bei der Verbindung $R^4$-X um Alkylhalogenide handeln. Zur Veretherung kann auch insbesondere Dimethylsulfat oder Diethylsulfat eingesetzt werden. Das Verethern ist nur eine Option, welche vom Fachmann je nach den gewünschten Eigenschaften des Copolymers ausgewählt werden kann.

Über die Monomere (a) hinaus umfasst das Copolymer mindestens ein davon verschiedenes, monoethylenisch ungesättigtes, hydrophiles Monomer (b). Selbstverständlich können auch Gemische mehrerer verschiedener hydrophiler Monomere (b) eingesetzt werden.

Die hydrophilen Monomere (b) umfassen neben einer ethylenischen Gruppe eine oder mehrere hydrophile Gruppen. Diese verleihen dem Copolymer aufgrund ihrer Hydrophilie eine ausreichende Wasserlöslichkeit. Bei den hydrophilen Gruppen handelt es sich insbesondere um funktionelle Gruppen, welche O- und/oder N-Atome umfassen. Sie können darüber hinaus als Heteroatome insbesondere S- und/oder P-Atome umfassen.

Besonders bevorzugt sind die Monomere (b) in beliebigem Verhältnis mit Wasser mischbar, zur Ausführung der Erfindung ist es jedoch ausreichend, dass das hydrophob assoziierende Copolymer die eingangs erwähnte Wasserlöslichkeit besitzt. Bevorzugt sollte die Löslichkeit der Monomere (b) in Wasser bei Raumtemperatur mindestens 100 g/l, insbesondere mindestens 200 g/l und besonders bevorzugt mindestens 500 g/l betragen.

Beispiele geeigneter funktioneller Gruppen umfassen Carbonylgruppen >C=O, Ethergruppen - O-, insbesondere Polyethylenoxygruppen $-(CH_2-CH_2-O-)_n-$, wobei n bevorzugt für eine Zahl von 1 bis 200 steht, Hydroxygruppen -OH, Estergruppen -C(O)O-, primäre, sekundäre oder tertiäre Aminogruppen, Ammoniumgruppen, Amidgruppen -C(O)-NH-, Carboxamidgruppen - $C(O)-NH_2$ oder saure Gruppen wie Carboxylgruppen -COOH, Sulfonsäuregruppen $-SO_3H$, Phosphonsäuregruppen $-PO_3H_2$ oder Phosphorsäuregruppen $-OP(OH)_3$.

Beispiele bevorzugter funktioneller Gruppen umfassen Hydroxygruppen -OH, Carboxylgruppen -COOH, Sulfonsäuregruppen $-SO_3H$, Carboxamidgruppen $-C(O)-NH_2$, Amidgruppen -C(O)-NH- sowie Polyethylenoxygruppen $-(CH_2-CH_2-O-)_n-H$, wobei n bevorzugt für eine Zahl von 1 bis 200 steht.

Die funktionellen Gruppen können direkt an die ethylenische Gruppe angebunden sein, oder aber über eine oder mehrere verknüpfende Kohlenwasserstoffgruppen mit der ethylenischen Gruppe verbunden sein.

Bei den hydrophilen Monomeren (b) handelt es sich bevorzugt um Monomere der allgemeinen Formel $H_2C=C(R^5)R^6$ (IV) , wobei $R^5$ für H oder Methyl und $R^6$ für eine hydrophile Gruppe oder eine, eine oder mehrere hydrophile Gruppen umfassende Gruppe steht.

Bei den Gruppen $R^6$ handelt es sich um Gruppen, welche Heteroatome in einer solchen Menge umfassen, so dass die eingangs definierte Wasserlöslichkeit erreicht wird.

Beispiele geeigneter Monomere (b) umfassen saure Gruppen umfassende Monomere, beispielsweise -COOH-Gruppen umfassende Monomere wie Acrylsäure oder Methacrylsäure, Crotonsäure, Itaconsäure, Maleinsäure oder Fumarsäure, Sulfonsäuregruppen umfassende Monomere wie Vinylsulfonsäure, Allylsulfonsäure, Sulfoethylmethacrylat, 2-Acrylamido-2-me-thylpropansulfonsäure (AMPS), 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpen-tansulfonsäure oder Phosphonsäuregruppen umfassende Monomere wie Vinylphosphonsäure, Allylphosphonsäure, N-(Meth)acrylamidoalkylphosphonsäuren oder (Meth)acryloyloxyalkylphosphonsäuren.

Zu nennen sind weiterhin Acrylamid und Methacrylamid sowie Derivate davon, wie beispielsweise N-Methyl(meth)acrylamid, N,N'-Dimethyl(meth)acrylamid sowie N-Methylolacrylamid, N-Vinylderivate wie N-Vinylformamid, N-Vinylacetamid, N-Vinylpyrrolidon oder N-Vinylcaprolactam sowie Vinylester, wie Vinylformiat oder Vinylacetat. N-Vinylderivate können nach Polymerisation zu Vinylamin-Einheiten, Vinylester zu Vinylalkohol-Einheiten hydrolysiert werden.

Weitere Beispiele umfassen Hydroxy- und/oder Ethergruppen umfassende Monomere, wie beispielsweise Hydroxyethyl(meth)acrylat, Hydroxypropyl(meth)acrylat, Allylalkohol, Hydroxyvinylethylether, Hydroxyvinylpropylether, Hydroxyvinylbutylether oder Verbindungen der Formel $H_2C=C(R^1)-O-(-CH_2-CH(R^7)-O-)_b-R^8$ (V) wobei $R^1$ wie oben definiert ist und b für eine Zahl von 2 bis 200, bevorzugt 2 bis 100 steht. Bei den Resten $R^7$ handelt es sich unabhängig voneinander um H, Methyl oder Ethyl, bevorzugt H oder Methyl, mit der Maßgabe, dass es sich bei mindestens 50 mol-% der Reste $R^7$ um H handelt. Bevorzugt handelt es sich bei mindestens 75 mol-% der Reste $R^7$ um H, besonders bevorzugt bei mindestens 90 mol-% und ganz besonders bevorzugt ausschließlich um H. Bei dem Rest $R^8$ handelt es sich um H, Methyl oder Ethyl, bevorzugt H oder Methyl. Die einzelnen Alkylenoxyeinheiten können statistisch oder blockweise angeordnet werden. Bei einem Blockcopolymer kann der Übergang zwischen den Blöcken abrupt oder graduell sein.

Weitere geeignete hydrophile Monomere (b) sind in WO 2011/133527 (Seite 15, Zeile 1-23) beschrieben.

Die oben genannten hydrophilen Monomere können selbstverständlich nicht nur in der dargestellten Säure- bzw. Basenform eingesetzt werden, sondern auch in Form entsprechender Salze. Es ist auch möglich, saure oder basische Gruppen nach der Bildung des Polymers in entsprechende Salze umzuwandeln. Bevorzugt handelt es sich bei den entsprechenden Salzen um Alkalimetallsalze oder Ammoniumsalze, besonders bevorzugt um organische Ammoniumsalze, insbesondere bevorzugt um wasserlösliche organische Ammoniumsalze.

Bevorzugt ist ein Copolymer, bei dem es sich bei mindestens einem der Monomere (b) um ein saure Gruppen

umfassendes Monomer handelt, wobei es sich bei den sauren Gruppen um mindestens eine Gruppe, ausgewählt aus der Gruppe von -COOH, -$SO_3$H und -$PO_3$H, und deren Salze handelt.

Bevorzugt handelt es sich bei mindestens einem der Monomere (b) um ein Monomer ausgewählt aus der Gruppe von (Meth)acrylsäure, Vinylsulfonsäure, Allylsulfonsäure, Sulfoethylmethacrylat und 2-Acrylamido-2-methylpropansulfonsäure (AMPS), besonders bevorzugt um Acrylsäure und/oder APMS bzw. deren Salze.

Bevorzugt handelt es sich umein Copolymer, welches mindestens zwei verschiedene monoethylenisch ungesättigte, hydrophile Monomere (b) umfasst, und es sich dabei um

- mindestens ein neutrales hydrophiles Monomer (b1), und
- mindestens ein hydrophiles anionisches Monomer (b2), welches mindestens eine saure Gruppe ausgewählt aus der Gruppe von -COOH, -$SO_3$H und -$PO_3H_2$ und deren Salze umfasst, handelt.

Beispiele geeigneter Monomere (b1) umfassen Acrylamid und Methacrylamid, bevorzugt Acrylamid sowie Derivate davon, wie beispielsweise N-Methyl(meth)acrylamid, N, N'-Dimethyl(meth)acrylamid sowie N-Methylolacrylamid. Weiterhin zu nennen sind N-Vinylderivate wie N-Vinylformamid, N-Vinylacetamid, N-Vinylpyrrolidon oder N-Vinylcaprolactam. Weiterhin zu nennen sind OH-Gruppen aufweisende Monomere wie Hydroxyethyl(meth)acrylat, Hydroxypropyl(meth)acrylat, Allylalkohol, Hydroxyvinylethylether, Hydroxyvinylpropylether oder Hydroxyvinylbutylether. Bevorzugt handelt es sich bei dem Monomer (b1) im Copolymer um Acrylamid beziehungsweise Derivate davon, besonders bevorzugt um Acrylamid.

Beispiele für anionische Monomere (b2) umfassen Acrylsäure oder Methacrylsäure, Crotonsäure, Itaconsäure, Maleinsäure oder Fumarsäure, Sulfonsäuregruppen umfassende Monomere wie Vinylsulfonsäure, Allylsulfonsäure, 2-Acrylamido-2-methylpropansulfonsäure (AMPS), 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpentansulfonsäure oder Phosphonsäuregruppen umfassende Monomere wie Vinylphosphonsäure, Allylphosphonsäure, N-(Meth)acrylamidoalkylphosphonsäuren oder (Meth)acryloyloxyalkylphosphonsäuren.

Beispiele bevorzugter anionischer Monomere (b2) umfassen Acrylsäure, Vinylsulfonsäure, Allylsulfonsäure, 2-Acrylamido-2-methylpropansulfonsäure (AMPS), 2-Acrylamidobutansulfonsäure, 3-Acrylamido-3-methyl-butansulfonsäure und 2-Acrylamido-2,4,4-trimethylpentansulfon-säure, ganz besonders bevorzugt ist 2-Acrylamido-2-methylpropansulfonsäure (AMPS).

Bevorzugt handelt es sich um ein Copolymer, welches als Monomer (b1) Acrylamid und als Monomer (b2) ein saure Gruppen umfassendes Monomer umfasst.

Bevorzugt handelt es sich um ein Copolymer, welches als Monomer (b1) Acrylamid und als Monomer (b2) ein saure Gruppen umfassendes Monomer umfasst, wobei die saure Gruppe -$SO_3$H ist. Insbesondere bevorzugt handelt es sich um ein Copolymer, welches als Monomer (b1) Acrylamid und als Monomer (b2) 2-Acrylamido-2-methylpropansulfonsäure (AMPS) umfasst.

Bevorzugt handelt es sich um ein Copolymer, welches als Monomer (b1) Acrylamid und als Monomer (b2) Acrylsäure umfasst.

Weiterhin bevorzugt handelt es sich um ein Copolymer, welches als Monomer (b1) Acrylamid und mindestens zwei weitere verschiedene saure Gruppen umfassende Monomere (b2) umfasst. Insbesondere bevorzugt handelt es sich um ein Copolymer, welches als Monomer (b1) Acrylamid und als saure Gruppen umfassendes Monomer (b2) ein Monomer umfassend die Gruppe -$SO_3$H und ein Monomer umfassend die Gruppe -COOH umfasst.

Weiterhin bevorzugt handelt es sich um ein Copolymer, welches als Monomer (b1) Acrylamid, als Monomer (b2) 2-Acrylamido-2-methylpropansulfonsäure (AMPS) und ein Monomer umfassend die Gruppe -COOH umfasst. Weiterhin bevorzugt handelt es sich um ein Copolymer, welches als Monomer (b1) Acrylamid, als Monomer (b2) 2-Acrylamido-2-methylpropansulfonsäure (AMPS) und Acrylsäure umfasst.

Die Menge der Monomere (b) im Copolymer beträgt 25 bis 99,9 Gew.-% bezogen auf die Gesamtmenge aller Monomere im Copolymer, bevorzugt 25 bis 99,5 Gew.-%. Die genaue Menge richtet sich nach der Art und dem gewünschten Verwendungszweck der hydrophob assoziierenden Copolymere und wird vom Fachmann entsprechend festgelegt.

Bevorzugt handelt es sich bei dem mindestens einem Copolymer um ein Copolymer auf Basis von mindestens einem Monomer (a) der Formel (I), sowie Acrylamid als neutrales hydrophiles Monomer (b1), und Acrylamido-2-methylpropansulfonsäure (AMPS) als anionisches hydrophiles Monomer (b2).

Insbesondere bevorzugt umfasst das mindestens eine Copolymer

0,5 bis 15 Gew.-% mindestens eines hydrophob assoziierenden Monomeres (a), sowie
19,5 bis 80 Gew.-% Acrylamid als neutrales hydrophiles Monomer (b1), und
19,5 bis 80 Gew.-% Acrylamido-2-methylpropansulfonsäure (AMPS) als anionisches hydrophiles Monomer (b2),

Ganz besonders bevorzugt umfasst das mindestens eine Copolymer

1 bis 7,5 Gew.-% mindestens eines hydrophob assoziierenden Monomeres (a), sowie
45 bis 55 Gew.-% Acrylamid als neutrales hydrophiles Monomer (b1), und
44 bis 54 Gew.-% Acrylamido-2-methylpropansulfonsäure (AMPS) als anionisches hydrophiles Monomer (b2),

In einer bevorzugten Ausführungsform umfasst die Komponente (β) zusätzlich (c) mindestens eine nichtionische nicht-polymerisierbare oberflächenaktive Komponente. Insbesondere kann es sich hierbei um mindestens ein nichtionisches Tensid handeln. Aber auch anionische und kationische Tenside sind geeignet, sofern sie an der Polymerisationsreaktion nicht teilnehmen.

Bevorzugt handelt es sich bei (c) um mindestens ein nichtionisches Tensid.

Es kann sich insbesondere um Tenside, bevorzugt nichtionische Tenside der allgemeinen Formel $R^{10}$-Y' handeln, wobei $R^{10}$ für einen Kohlenwasserstoffrest mit 8 bis 32, bevorzugt 10 bis 20 und besonders bevorzugt 12 bis 18 Kohlenstoffatomen steht und Y' für eine hydrophile Gruppe, bevorzugt eine nichtionische hydrophile Gruppe, insbesondere eine Polyalkoxygruppe.

Bei dem nichtionischen Tensid handelt es sich bevorzugt um einen ethoxylierten langkettigen, aliphatischen Alkohol mit 10 bis 20 Kohlenstoffatomen, welcher optional aromatische Anteile enthalten kann.

Exemplarisch seinen genannt: $C_{12}C_{14}$-Fettalkoholethoxylate, $C_{16}C_{18}$-Fettalkoholethoxylate, $C_{13}$-Oxoalkoholethoxylate, $C_{10}$-Oxoalkoholethoxylate, $C_{13}C_{15}$-Oxoalkoholethoxylate, $C_{10}$-Guerbetalkoholethoxylate und Alkylphenolethoxylate. Bewährt haben sich insbesondere Verbindungen mit 5 bis 20 Ethylenoxyeinheiten, bevorzugt 8 bis 18 Ethylenoxyeinheiten. Optional können auch noch geringe Mengen von höheren Alkylenoxyeinheiten, insbesondere Propylenoxyund/oder Butylenoxyoxyeinheiten vorhanden sein, wobei die Menge als Ethylenoxyeinheiten aber in der Regel mindestens 80 mol-% bezüglich aller Alkylenoxyeinheiten betragen sollte.

Geeignet sind insbesondere Tenside ausgewählt aus der Gruppe der ethoxylierten Alkylphenole, der ethoxylierten, gesättigten iso-C13-Alkohole und/oder der ethoxylierten C10-Guerbetalkohole, wobei jeweils 5 bis 20 Ethylenoxyeinheiten, bevorzugt 8 bis 18 Ethylenoxyeinheiten in den Alkoxyresten vorhanden sind.

Die Copolymere können nach dem Fachmann prinzipiell bekannten Methoden durch radikalische Polymerisation der Monomere (a) und (b) hergestellt werden, beispielsweise durch Substanz-, Lösungs-, Gel-, Emulsions-, Dispersions- oder Suspensionspolymerisation, bevorzugt in wässriger Phase. Bevorzugt wird die Polymerisation in Gegenwart mindestens einer oberflächenaktiven Komponente (c) durchgeführt.

Die vorliegende Erfindung betrifft ein Verfahren zur Herstellung einer oben beschriebenen Zusammensetzung, wobei zur Herstellung des Copolymers mindestens ein Monomer (a) und mindestens ein hydrophiles Monomer (b) einer wässrigen Lösungspolymerisation unterzogen werden und in Kontakt bringen des erhaltenen wasserlöslichen Copolymers (β) mit dem mindestens einem anorganischen Bindemittel. Bevorzugt wird die Lösungspolymerisation in Gegenwart mindestens einer oberflächenaktiven Komponente (c) durchgeführt.

In Bezug auf das Verfahren zur Herstellung des Copolymers gelten die bevorzugten Ausführungsformen, welche oben im Zusammenhang mit den Copolymeren beschrieben wurden.

Ein Aspekt der vorliegenden Erfindung ist ein Verfahren zur Herstellung des Copolymers, wobei die Lösungspolymerisation bei einem pH-Wert von 5,0 bis 9 durchgeführt wird.

Die verwendeten Monomere (a) der Formel (I) werden nach dem oben dargestellten Herstellverfahren durch mehrstufige Alkoxylierung von Alkoholen (II) optional gefolgt von einer Veretherung bereitgestellt. In Bezug auf das Verfahren zur Herstellung des Monomers (a) gelten die bevorzugten Ausführungsformen, welche oben im Zusammenhang mit den Copolymeren beschrieben wurden.

In einer bevorzugten Ausführungsformen wird die Herstellung des Copolymers mittels Gelpolymerisation in wässriger Phase vorgenommen, vorausgesetzt alle eingesetzten Monomere weisen eine ausreichende Wasserlöslichkeit auf. Im Sinne der vorliegenden Erfindung handelt es sich bei einer Gelpolymerisation um einen Spezialfall der Lösungspolymerisation und wird von diesem Begriff somit mit umfasst. Zur Gelpolymerisation wird zunächst eine Mischung aus den Monomeren, Initiatoren und sonstigen Hilfsstoffen mit Wasser oder einem wässrigen Lösemittelgemisch bereitgestellt. Geeignete wässrige Lösemittelgemische umfassen Wasser sowie mit Wasser mischbare organische Lösemittel, wobei der Anteil von Wasser im Regelfalle mindestens 50 Gew.-%, bevorzugt mindestens 80 Gew.-% und besonders bevorzugt mindestens 90 Gew.-% beträgt. Zu nennen als organische Lösemittel sind hierbei insbesondere mit Wasser mischbare Alkohole wie Methanol, Ethanol oder Propanol. Saure Monomere können vor der Polymerisation ganz oder teilweise neutralisiert werden.

Die Konzentration aller Komponenten mit Ausnahme der Lösemittel beträgt üblicherweise 25 bis 60 Gew.-%, bevorzugt 30 bis 50 Gew.-%.

Die Mischung wird anschließend fotochemisch und/oder thermisch polymerisiert, vorzugsweise bei -5 °C bis 50°C. Sofern thermisch polymerisiert wird, setzt man bevorzugt Polymerisationsinitiatoren ein, die schon bei vergleichsweise niedriger Temperatur starten, wie beispielsweise Redoxinitiatoren. Die thermische Polymerisation kann schon bei

Raumtemperatur oder durch Erwärmen der Mischung, bevorzugt auf Temperaturen von nicht mehr als 50°C vorgenommen werden. Die fotochemische Polymerisation wird üblicherweise bei Temperaturen von -5 bis 10°C vorgenommen. Besonders vorteilhaft kann man fotochemische und thermische Polymerisation miteinander kombinieren, indem man der Mischung sowohl Initiatoren für die thermische als auch für die fotochemische Polymerisation zugibt. Die Polymerisation wird hierbei zunächst fotochemisch bei niedrigen Temperaturen, vorzugsweise -5 bis + 10°C gestartet. Durch die freiwerdende Reaktionswärme erwärmt sich die Mischung und hierdurch wird zusätzlich die thermische Polymerisation gestartet. Mittels dieser Kombination lässt sich ein Umsatz von mehr als 99% erreichen.

Die Gelpolymerisation erfolgt in aller Regel ohne Rühren. Sie kann batchweise erfolgen, indem man die Mischung in einem geeigneten Gefäß bei einer Schichtdicke von 2 bis 20 cm bestrahlt und/oder erwärmt. Durch die Polymerisation entsteht ein festes Gel. Die Polymerisation kann auch kontinuierlich erfolgen. Hierzu benutzt man eine Polymerisationsapparatur, welche ein Transportband zur Aufnahme der zu polymerisierenden Mischung verfügt. Das Transportband ist mit Einrichtungen zum Erwärmen oder zum Bestrahlen mit UV-Strahlung ausgestattet. Hiernach gießt man die Mischung mittels einer geeigneten Vorrichtung an einem Ende des Bandes auf, im Zuge des Transportes in Bandrichtung polymerisiert die Mischung und am anderen Ende des Bandes kann man das feste Gel abnehmen.

Das Gel wird nach der Polymerisation zerkleinert und getrocknet. Die Trocknung sollte bevorzugt bei Temperaturen unterhalb von 100°C erfolgen. Zum Vermeiden von Zusammenkleben kann man für diesen Schritt ein geeignetes Trennmittel verwenden. Man erhält das Copolymer als Pulver.

Weitere Einzelheiten zur Durchführung einer Gelpolymerisation sind beispielsweise in DE 10 2004 032 304 A1, Abschnitte [0037] bis [0041] offenbart.

Copolymere in Form von alkalilöslichen, wässrigen Dispersionen können bevorzugt mittels Emulsionspolymerisation hergestellt werden. Die Durchführung einer Emulsionspolymerisation unter Verwendung hydrophob assoziierender Monomere ist beispielsweise in WO 2009/019225 Seite 5, Zeile 16 bis Seite 8, Zeile 13 offenbart.

Die Copolymere besitzen vorzugsweise ein Molmassenmittel M von 2.000.000 bis 30.000.000 g/mol, weiterhin 3.000.000 bis 25.000.000 g/mol, insbesondere bevorzugt 5.000.000 g/mol bis 20.000.000 g/mol und insbesondere 6.000.000 g/mol bis 16.000.000 g/mol.

In einer bevorzugten Ausführungsform handelt es sich bei dem anorganischen Bindemittel um mindestens eines aus der Reihe Calciumsulfat-n-Hydrat, Portlandzement, Weißzement, Calciumaluminatzement, Calciumsulfoaluminatzement, Geopolymer und latent hydraulisches bzw. puzzolanisches Bindemittel wie z. B. Flugasche, Metakaolin, Silicastaub und Hüttensand. Besonders bevorzugt sind Zement auf Basis Portlandzement, Calciumsulfat Halbhydrat, Calciumsulfat Anhydrit und Calciumaluminatzement.

Bei der erfindungsgemäßen Zusammensetzung kann es sich insbesondere um pulverförmige Mischungen handeln, welche nachfolgend mit Wasser angemacht werden.

In einer weiterhin bevorzugten Ausführungsform umfasst die erfindungsgemäße Zusammensetzung einen anorganischen Füllstoff. Bei den anorganischen Füllstoff kann es sich bevorzugt um mindestens einen aus der Reihe Quarzsand, Quarzmehl, Kalkstein, Schwerspat, Calcit, Dolomit, Talkum, Kaolin, Glimmer und Kreide handeln.

In einer speziellen Ausführungsform besteht die erfindungsgemäße Zusammensetzung, bezogen auf deren Trockenmasse, zu mindestens 80 Gew.-%, insbesondere zu mindestens 90 Gew.-%, und besonders bevorzugt zu mehr als 95 Gew.-% aus einem anorganischen Bindemittel und einem anorganischen Füllstoff.

In einer besonders bevorzugten Ausführungsform handelt es sich bei der erfindungsgemäßen Zusammensetzung um einen Werktrockenmörtel, insbesondere um Mauermörtel, Putzmörtel, Mörtel für Wärmedämmverbundsysteme, Sanierputze, Fugenmörtel, Fliesenkleber, Dünnbettmörtel, Estrichmörtel, Vergussmörtel, Einpressmörtel, Spachtelmassen, Dichtschlämmen oder Auskleidungsmörtel.

Das ständige Streben nach weitgehender Rationalisierung sowie verbesserter Produktqualität hat dazu geführt, dass im Baubereich Mörtel für die verschiedensten Einsatzbereiche heute praktisch nicht mehr auf der Baustelle selbst aus den Ausgangsstoffen zusammengemischt wird. Diese Aufgabe wird heute weitgehend von der Baustoffindustrie werksseitig übernommen und die gebrauchsfertigen Mischungen als sogenannte Werktrockenmörtel zur Verfügung gestellt. Dabei werden fertige Gemische, die auf der Baustelle ausschließlich durch Zugabe von Wasser und Durchmischen verarbeitbar gemacht werden, gemäß DIN 18557 als Werkmörtel, insbesondere als Werktrockenmörtel bezeichnet. Derartige Mörtelsysteme können die verschiedensten bauphysikalischen Aufgaben erfüllen. Je nach gestellter Aufgabe werden dem Bindemittel weitere Additive bzw. Zusatzmittel beigemengt, um den Werktrockenmörtel an den speziellen Einsatzzweck anzupassen. Hierbei kann es sich bspw. um Schwundreduzierer, Expansionsmittel, Beschleuniger, Verzögerer, Dispergiermittel, Entschäumer, Luftporenbildner und Korrosionsinhibitoren handeln.

In einer besonderen Ausführungsform kann es sich bei der erfindungsgemäßen Zusammensetzung auch um eine selbstnivellierende Verlaufsmasse handeln.

Insbesondere kann die erfindungsgemäße Zusammensetzung somit in Form eines Trockenmörtels vorliegen. Die vorliegende Anmeldung umfasst hierbei auch ein Verfahren zur Herstellung der erfindungsgemäßen Zusammensetzung, wobei das mindestens eine Copolymer mit dem mindestens einen anorganischen Bindemittel und ggf. weiteren Komponenten durch Mischen in Kontakt gebracht wird. Insbesondere liegt das Copolymer hierbei in Form eines Pulvers

vor.

Für Trockenmörtelanwendungen werden die Copolymere bevorzugt in Pulverform eingesetzt. Dabei ist es bevorzugt, dass die Größenverteilung der Teilchen so gewählt wird, dass der mittlere Teilchendurchmesser kleiner 100 μm ist und der Anteil an Partikeln mit einem Teilchendurchmesser größer 200 μm kleiner als 2 Gew.-% beträgt. Bevorzugt sind solche Pulver, deren mittlerer Teilchendurchmesser kleiner 60 μm ist und der Anteil an Partikeln mit einem Teilchendurchmesser größer 120 μm kleiner als 2 Gew.-% ist. Besonders bevorzugt sind solche Pulver, deren mittlerer Teilchendurchmesser kleiner 50 μm ist und der Anteil an Partikeln mit einem Teilchendurchmesser größer 100 μm kleiner als 2 Gew.-% ist. Der Teilchendurchmesser der Copolymere in Pulverform kann beispielsweise durch Vermahlung auf die bevorzugten Größenverteilungen gebracht werden.

Bei dem anorganischen Bindemittel kann es sich in einer bevorzugten Ausführungsform um Calciumsulfat-n-Hydrat (n=0 bis 2), im Folgenden auch als Gips bezeichnet, handeln. Der Ausdruck "Gips" wird im vorliegenden Zusammenhang synonym mit Calciumsulfat verwendet, wobei das Calciumsulfat in seinen unterschiedlichen wasserfreien und hydratisierten Formen mit und ohne Kristallwasser vorliegen kann. Natürlicher Gips umfasst im Wesentlichen Calciumsulfat-Dihydrat ("Dihydrat"). Die natürliche kristallwasserfreie Form von Calciumsulfat ist vom Ausdruck "Anhydrit" umfasst. Neben den natürlichen Erscheinungsformen stellt Calciumsulfat ein typisches Nebenprodukt technischer Prozesse dar, worunter dann "synthetischer Gips" verstanden wird. Ein typisches Beispiel für einen synthetischen Gips aus technischen Prozessen ist die Abgasentschwefelung. Synthetischer Gips kann aber auch gleichermaßen das Nebenprodukt von Phosphorsäure- oder Flusssäure-Herstellungsverfahren entstehen. Typischer Gips ($CaSO_4 \times 2 H_2O$) kann calziniert werden, indem das Kristallwasser abgetrennt wird. Produkte der unterschiedlichsten Calzinierungsverfahren sind α- oder β-Halbhydrat. β-Halbhydrat resultiert aus einer raschen Erhitzung in offenen Gefäßen, bei einer gleichzeitig schnellen Verdampfung von Wasser unter Bildung von Hohlräumen. α-Halbhydrat wird hergestellt durch die Entwässerung von Gips in geschlossen Autoklaven. Die Kristallform in diesem Fall ist relativ dicht, weshalb dieses Bindemittel weniger Wasser zur Verflüssigung benötigt als β-Halbhydrat. Auf der anderen Seite rehydratisiert Halbhydrat mit Wasser zu Dihydrat-Kristallen. Üblicherweise ist für die Hydratation von Gips ein Zeitbedarf von einigen Minuten bis Stunden notwendig, woraus eine verkürzte Verarbeitungszeit im Vergleich zu Zementen resultiert, die zur vollständigen Hydratation mehrere Stunden bis Tage benötigen. Diese Eigenschaften machen Gips zu einer brauchbaren Alternative zu Zementen als Bindemittel in den verschiedensten Anwendungsgebieten. Außerdem zeigen ausgehärtete Gipsprodukte eine ausgeprägte Härte und Druckfestigkeit.

Für die unterschiedlichsten Anwendungsgebiete wird β-Halbhydrat ausgewählt, weil dieser besser verfügbar ist und unter wirtschaftlichen Gesichtspunkten zahlreiche Vorteile zeigt. Allerdings werden diese Vorteile dadurch zum Teil wieder aufgehoben, dass β-Halbhydrat bei der Verarbeitung einen höheren Wasserbedarf hat, um überhaupt fließfähige Suspensionen zu erzielen. Zudem neigen die hieraus hergestellten getrockneten Gipsprodukte zu einer gewissen Schwäche, welche auf Restwassermengen zurückzuführen sind, die in der Kristallmatrix beim Aushärten verblieben sind. Aus diesem Grund zeigen entsprechende Produkte eine geringere Härte als Gipsprodukte, die mit geringeren Mengen an Anmachwasser zubereitet worden sind.

Besonders bevorzugt handelt es sich deshalb im Sinne der vorliegenden Erfindung bei Calciumsulfat-n-Hydrat um β-Calciumsulfathalbhydrat. β-Calciumsulfathalbhydrat ist hierbei insbesondere zur Verwendung in gipsbasierten Fließestrich geeignet.

Weiterhin bevorzugt kann es sich bei dem anorganischen Bindemittel um ein Geopolymer handeln. Bei Geopolymeren handelt es sich um anorganische Bindemittelsysteme, basierend auf reaktionsfähigen wasserunlöslichen Verbindungen auf der Basis von $SiO_2$ in Verbindung mit $Al_2O_3$, die in wässrig alkalischem Medium aushärten. Spezifische Geopolymerzusammensetzungen sind z.B. in US 4,349,386, WO 85/03699 und US 4,472,199 beschrieben. Als reaktionsfähiges Oxid bzw. Oxidgemisch können dabei u.a. Microsilica, Metakaolin, Alumosilikate, Flugaschen, aktivierter Ton, Puzzolane oder Mischungen daraus eingesetzt werden. Das alkalische Medium zur Aktivierung der Bindemittel besteht üblicherweise aus wässrigen Lösungen von Alkalimetallcarbonaten, Alkalimetallfluoriden, Alkalimetallhydroxiden, Alkalimetallaluminaten und/oder Alkalimetallsilikaten wie z.B. löslichem Wasserglas. Im Vergleich zu Portlandzement können Geopolymere kostengünstiger und beständiger sein, insbesondere gegenüber Säuren und eine günstigere $CO_2$-Emissionsbilanz aufweisen.

Die erfindungsgemäße Zusammensetzung kann insbesondere auch ein Bindemittelgemisch umfassen. Darunter werden im vorliegenden Zusammenhang Gemische aus mindestens zwei Bindemitteln aus der Reihe Zement, puzzolanisches und/oder latent hydraulisches Bindemittel, Weißzement, Spezialzement, Calciumaluminatzement, Calciumsulfoaluminatzement, Geopolymer und die verschiedenen wasserhaltigen und wasserfreien Calciumsulfate verstanden.

Die erfindungsgemäße Zusammensetzung kann im Rahmen der vorliegenden Erfindung in trockener Form vorliegen, wobei hierunter zu verstehen ist, dass diese einen Wassergehalt nach Karl-Fischer von weniger als 5 Gew.-%, vorzugsweise weniger als 1 Gew.-% und besonders bevorzugt von weniger als 0,1 Gew.-% aufweist.

Es ist bevorzugt, wenn die erfindungsgemäße Zusammensetzung eine mittlere Teilchengröße zwischen 0,1 und 1000 μm, besonders bevorzugt zwischen 1 und 200 μm aufweist. Die Teilchengröße wird hierbei durch Laserdiffraktometrie bestimmt.

Ein weiterer Gegenstand der vorliegenden Anmeldung ist die Verwendung des Copolymers der Komponente (β) in einer erfindungsgemäßen Zusammensetzung als rheologisches Additiv. Insbesondere zur Verringerung der Segregation, Sedimentation und des Blutens der Zusammensetzung.

Die nachfolgenden Beispiele sollen die Erfindung näher erläutern.

Beispiele

Herstellung Monomer M1:

In einem 1 L Rührautoklaven aus Edelstahl wurden 44,1 g Hydroxybutylvinylether vorgelegt. Anschließend wurden 3,12 g KOMe (32 %ig in MeOH) dosiert und das Methanol bei 80 °C und ca. 30 mbar abgezogen. Anschließend wurde auf 140 °C aufgeheizt, der Reaktor mit Stickstoff gespült und ein Stickstoff-Vordruck von 1,0 bar eingestellt. Anschließend wurden 368 g Ethylenoxid (EO) innerhalb von ca. 3 h dosiert. Nach einer halbstündigen Nachreaktion bei 140 °C wurde der Reaktor auf 125 °C abgekühlt und es wurden innerhalb von 3,5 h insgesamt 392 g Pentenoxid (PeO) eindosiert. Die Nachreaktion lief über Nacht.

Es wird eine Hydroxybutylvinyletheralkoxylat mit 22 EO-Einheiten und 12 PeO-Einheiten (Monomer M1) erhalten. Das Produkt hatte eine OH-Zahl von 31,9 mg KOH/g (Theorie: 26,5 mg KOH/g). Die OH-Zahl wurde mittels der Essigsäureanhydrid (ESA)-Methode ermittelt.

Herstellung Monomer M2:

In einem 2 l Druckautoklaven mit Ankerrührer wurden 135,3 g (1,16 mol) Hydroxybutylvinylether (HBVE) (mit 100 ppm Kaliumhydroxid (KOH) stabilisiert) vorgelegt und der Rührer angestellt. 1,06 g Kaliummethanolat (KOMe)-Lösung (32% KOMe in Methanol (MeOH), entspricht 0,0048 mol Kalium) wurden zugefahren und der Rührbehälter auf einen Druck kleiner 10 mbar evakuiert, auf 80°C aufgeheizt und 70 min bei 80°C und einem Druck von kleiner 10 mbar betrieben. MeOH wurde abdestilliert.

In einer alternativen Durchführung wurde die Kaliummethanolat (KOMe)-Lösung (32% KOMe in Methanol (MeOH)) zugefahren und der Rührbehälter auf einen Druck von 10 - 20 mbar evakuiert, auf 65°C aufgeheizt, 70 min bei 65°C und einem Druck von 10 - 20 mbar betrieben. MeOH wurde abdestilliert.

Es wurde dreimal mit $N_2$ (Stickstoff) gespült. Danach wurde der Behälter auf Druckdichtigkeit geprüft, 0,5 bar Überdruck (1,5 bar absolut) eingestellt und auf 120°C aufgeheizt. Man entspannte auf 1 bar absolut und dosierte 1126 g (25,6 mol) Ethylenoxid (EO) zu bis $p_{max}$ 3.9 bar absolut und $T_{max}$ 150°C betrug. Nach Zugabe von 300 g EO wurde die Dosage abgebrochen (ca. 3 h nach Beginn), 30 min gewartet und auf 1,3 bar absolut entspannt. Danach wurde das restliche EO zudosiert. Die Zudosierung an EO dauerte inklusive Entspannung insgesamt 10 h.

Es wurde bis zur Druckkonstanz bei ca. 145-150°C (1 h) nachgerührt, auf 100°C abgekühlt und bei einem Druck von weniger als 10 mbar für 1 h von Niedrigsiedern befreit.

Hierbei wurde ein Hydroxybutylvinyletheralkoxylat mit 22 EO-Einheiten erhalten.

In einem 2 l Druckautoklaven mit Ankerrührer wurden 588,6 g (0,543 mol) Hydroxybutylvinyletheralkoxylat mit 22 EO-Einheiten vorgelegt und der Rührer eingeschaltet. Danach wurden 2,39 g 50%-ige NaOH-Lösung (0,030 mol NaOH, 1,19 g NaOH) zugegeben, Vakuum von <10 mbar angelegt, auf 100°C erhitzt und für 80 min gehalten, um das Wasser abzudestillieren.

Man spülte dreimal mit $N_2$. Danach wurde der Behälter auf Druckdichtigkeit geprüft, 0,5 bar Überdruck (1,5 bar absolut) eingestellt, auf 127°C aufgeheizt und danach der Druck auf 1,6 bar absolut eingestellt. Es wurden 59,7 g (1,358 mol) EO zudosiert bei 127°C, $p_{max}$ betrug 3,9 bar absolut. Es wurde 30 min gewartet bis sich Druckkonstanz einstellte, danach wurde auf 1,0 bar absolut entspannt.

Es wurden 625,5 g (8,688 mol) BuO (Butylenoxid) bei 127°C zudosiert, $p_{max}$ betrug 3,1 bar absolut. Ein zwischenzeitliches Entspannen infolge Füllgradzunahme wurde notwendig. Man stoppte die BuO-Dosierung, ließ 1 h ausreagieren bis Druck konstant war und entspannte auf 1,0 bar absolut. Danach wurde die Zudosierung von BuO fortgeführt. $P_{max}$ betrug weiterhin 3,1 bar (erstes Entspannen nach 610 g BuO, Gesamtdosierzeit BuO 8 h inkl. Entspannungspause). Nach Ende der BuO-Dosierung ließ man 8 h nachreagieren und erwärmte dann auf 135°C. Danach wurden 83,6 g (1,901 mol) EO bei 135°C zudosiert, $p_{max}$ betrug 3,1 bar absolut. Nach Ende der EO-Dosierung ließ man 4 h nachreagieren. Es wurde auf 100°C abgekühlt, Restoxid abgezogen bis der Druck für mindestens 10 min unter 10 mbar lag. Dann erfolgte die Zugabe von 0,5% Wasser bei 120°C und anschließendes Abziehen bis der Druck für mindestens 10 min unter 10 mbar lag. Das Vakuum wurde mit N2 aufgehoben und es erfolgte die Zugabe von 100 ppm Butylhydroxytoluol (BHT). Die Abfüllung erfolgte bei 80°C unter $N_2$.

Es wird eine Hydroxybutylvinyletheralkoxylat mit 24,5 EO-Einheiten, 16 BuO-Einheiten und 3,5 EO-Einheiten (Monomer M2) erhalten. Die Analytik (Massenspektrum, GPC, $^1$H-NMR in $CDCl_3$, $^1$H-NMR in MeOD) bestätigte die

Struktur.

Allgemeines Herstellungsbeispiel für die Copolymere A und B

In einem 2 l-Dreihalskolben mit Rührer und Thermometer wurden die folgenden Komponenten miteinander gemischt:

290 g destilliertes Wasser,
242,5 g Acrylamido-2-methylpropansulfonsäure, Na-Salz (50 Gew.-%ige Lösung in Wasser; 24,7 Mol%),
1,2 g Siliconentschäumer,
2,4 g Pentanatriumdiethylentriaminpentaacetat (Komplexbildner),
228,8 g Acrylamid (50 Gew.-%ige Lösung in Wasser; 75,2 Mol%),
4,6 g Monomere M1 (Vergleichsbeispiel, Copolymer B) oder Monomer M2 (erfindungsgemäß, Copolymer A)

Die Lösung wurde mit 20 %iger Natronlauge auf pH 6 eingestellt, durch 10 minütiges Spülen mit Stickstoff inertisiert und auf ca. 5°C abgekühlt. Die Lösung wurde in einen Plastikbehälter umgefüllt und anschließend wurden nacheinander 200 ppm 2,2'-Azobis-(2-amidinopropan)-dihydrochlorid (als 1 Gew.-%ige Lösung), 10 ppm tert.-Butylhydroperoxid (als 0,1 Gew.-%ige Lösung), 5 ppm $FeSO_4*7H_2O$ (als 1 Gew.-%ige Lösung) und 6 ppm Natriumbisulfit (als 1 Gew.-%ige Lösung) zugesetzt. Die Polymerisation wurde durch Bestrahlen mit UV-Licht (zwei Philips Röhren; Cleo Performance 40 W) gestartet. Nach ca. 2 h wurde das harte Gel aus dem Plastikbehälter genommen und mit einer Schere in ca. 5 cm $\times$ 5 cm $\times$ 5 cm große Gelwürfel geschnitten. Bevor die Gelwürfel mittels eines herkömmlichen Fleischwolfs zerkleinert wurden, wurden sie mit einem handelsüblichen Trennmittel eingestrichen. Bei dem Trennmittel handelt es sich um eine Polydimethylsiloxanemulsion, die 1:20 mit Wasser verdünnt wurde. Das erhaltene Gelgranulat wurde gleichmäßig auf Trockengitter verteilt und in einem Umlufttrockenschrank bei ca. 90 bis 120°C in Vakuum bis zur Gewichtskonstanz getrocknet.

Herstellung des Copolymers C auf Basis des Monomers M2 (Vergleichsbeispiel)

In einem 2 l-Polymerisationsreaktor mit Rührer, Rückflusskühler, Thermometer und Inertgasanschluss wurden 663,77 g demineralisiertes Wasser vorgelegt. Unter Rühren wurden 151,60 g (0,331 mol) 2-Acrylamido-2-methylpropansulfonsäure, Na-Salz (50 %ige Lösung in Wasser), 1,0 g Xiameter AFE-0400 (Siliconentschäumer), 142,68 g (1,00 mol) Acrylamid (50 %ige Lösung in Wasser) und 3,0 g Trilon C (5 %ige wässrige Lösung des Pentanatriumsalzes der Diethylentriaminpentaessigsäure) zugegeben. Anschließend wurde der pH-Wert mit einer 5 %igen NaOH-Lösung und/oder 5 %igen $H_2SO_4$-Lösung auf 6.0 eingestellt. Danach wurden 2,85 g (0,0011 mol) Monomer M2 und 1,0 g Natriumhypophosphit (10 %ige Lösung in Wasser) als Regler zugegeben. Nach der Zugabe von 22,01 g demineralisiertem Wasser wurde der pH-Wert mit einer 5 %igen NaOH-Lösung und/oder 5 %igen $H_2SO_4$-Lösung erneut auf 6.0 eingestellt. Die Lösung wurde durch 10 minütige Spülung mit Stickstoff inertisiert und auf 60°C erwärmt. Anschließend wurden nacheinander 1,6 g Tetraethylenpentamin (20 Gew.-%ige Lösung in Wasser) und 10,0 g Natriumperoxodisulfat (20 Gew.-%ige Lösung in Wasser) zugesetzt, um die Polymerisation zu starten. Nach dem Temperaturmaximum wurden 5,0 g 2,2'-Azobis(2-methylpropionamidine)dihydrochloride (10 %ige Lösung in Wasser) zugegeben und anschließend noch 1 Stunde bei 65 °C nachgerührt, um die Polymerisation zu vervollständigen.

Anwendungstechnische Versuche

Der Calciumsulfat-Fließestrich setzte sich aus 39,55 Gew.-Teilen Anhydrit und 60,0 Gew.-Teilen Normsand (DIN EN 196-1) zusammen. Als Anreger wurde 0,45 Gew.-Teile Kaliumsulfat zugegeben. Die eingesetzte Wassermenge betrug 14,0 Gew.-Teile, was einem Wasserbindemittelwert von 0.35 entspricht. Zur Verflüssigung des Calciumsulfat-Fließestrich wurde ein Polycarboxylatether zugegeben. Der Gehalt des Polycarboxylatethers wurde mit 0,04 Gew.-Teilen so gewählt, dass der Calciumsulfat-Fließestrich, ohne die Zugabe eines Copolymers 5 min nach Wasserzugabe, ein Fließmaß am Hägermann-Konus von 280$\pm$5 mm erreichte.

Die Herstellung der Calciumsulfat-Fließestriche erfolgte in Anlehnung an DIN EN 196-1:2005 in einem Mörtelmischer mit einem Fassungsvermögen von ca. 5 Liter. Zum Anmischen wurden Wasser, Fließmittel, Copolymer (siehe Tabelle 1) und Anhydrit in den Mischbehälter gegeben. Unmittelbar danach wurde der Mischvorgang mit niedriger Geschwindigkeit der Wirblers (140 Umdrehungen pro Minute (U/min)) gestartet. Nach 30 Sekunden wurde der Normsand gleichmäßig innerhalb von 30 Sekunden der Mischung zugegeben. Danach wurde der Mischer auf eine höhere Geschwindigkeit umgeschaltet (285 U/min) und das Mischen für weitere 30 Sekunden fortgesetzt. Anschließend wurde der Mischer für 90 Sekunden angehalten. Während der ersten 30 Sekunden wurde der Calciumsulfat-Fließestrich, der an der Wand und am unteren Teil der Schüssel klebte, mit einem Gummischrapper entfernt und in die Mitte der Schüssel

gegeben. Nach der Pause wurde der Calciumsulfat-Fließestrich für weitere 60 Sekunden bei der höheren Mischgeschwindigkeit gemischt. Die Gesamtmischzeit betrug 4 Minuten.

Zur Beurteilung des Einflusses des Copolymers auf die Fließeigenschaften des Calciumsulfat-Fließestrichs wurde unmittelbar nach Ende des Mischvorgangs von allen Proben das Fließmaß mit dem Hägermann-Konus ohne Zuführung von Verdichtungsenergie in Anlehnung an die SVB-Richtlinie des Deutschen Ausschusses für Stahlbeton (siehe hierzu: Deutscher Ausschuss für Stahlbetonbau (Hrsg.): DAfStb - Richtlinie Selbstverdichtender Beton (SVB-Richtlinie). Berlin, 2003) bestimmt. Der Hägermann-Konus ($d_{oben}$ = 70 mm, $d_{unten}$ = 100 mm, h = 60 mm) wurde mittig auf einer trockenen Glasplatte mit einem Durchmesser von 400 mm platziert und bis zur vorgesehenen Höhe mit Calciumsulfat-Fließestrich befüllt. Unmittelbar nach dem Ausnivilieren bzw. 5 min nach dem ersten Kontakt von Anhydrit und Wasser wurde der Hägermann-Konus abgezogen, zum Abtropfen 30 Sekunden über dem auseinander fließenden Calciumsulfat-Fließestrich gehalten und dann entfernt. Sobald das Fließmaß zum Stillstand kam, wurde der Durchmesser mit einem Messschieber an zwei rechtwinklig zueinander liegenden Achsen bestimmt und der Mittelwert berechnet. Das Fließmaß ist ein Kennwert für die Fließgrenze eines Calciumsulfat-Fließestrichs (siehe hierzu: Roussel, N. et al.: Cement and Concrete Research, Vol. 35, No. 5, (2005), S. 817-822). Mit abnehmendem Fließmaß lässt sich der Calciumsulfat-Fließestrich schlechter verarbeiten.

Zur Charakterisierung des Einflusses des Copolymers auf die Robustheit des Calciumsulfat-Fließestrichs gegenüber Sedimentation und Bluten (Absetzen von Wasser auf der Oberfläche) wurden 200 ml des Calciumsulfat-Fließestrichs nach dem Anmischen in einen Glaszylinder mit einem Durchmesser von 35 mm gefüllt (siehe hierzu: A. Perrot et al. / Cement and Concrete Research 42 (2012) S. 937-944). Nach einer Ruhezeit von 30, 60 und 120 min wurde die Höhe des Wasserfilms (Blutwasser) auf der Oberfläche des Calciumsulfat-Fließestrichs gemessen. Je höher der Wasserfilm auf der Oberfläche des Mörtels ist, desto geringer ist die stabilisierende Wirkung des eingesetzten Copolymers. Die Ergebnisse sind in Tabelle 1 zusammengefasst.

Tabelle 1: Ergebnisse der anwendungstechnischen Versuche

| Stabilisierer | Dosierung [Gew.-% bez. auf Anhydrit] | Fließmaß [cm] | Höhe des Wasserfilms in [mm] nach 0 min | 30 min | 60 min | 120 min | Molmassenmittel M |
|---|---|---|---|---|---|---|---|
| Referenz ohne Copolymer | 0.000 | 28.4 | 0.000 | 0.042 | 0.161 | 0.289 | |
| Copolymer A auf Basis von Monomer M2 (erfindungsgemäß) | 0.030<br>0.050<br>0.100 | 24.1<br>23.7<br>21.8 | 0.000<br>0.000<br>0.000 | 0.000<br>0.000<br>0.000 | 0.035<br>0.000<br>0.000 | 0.127<br>0.000<br>0.000 | $7{,}2 \cdot 10^6$ g/mol |
| Copolymer B auf Basis von Monomer M1 (Vergleichsbeispiel) | 0.030<br>0.050<br>0.100 | 20.6<br>20.7<br>19.4 | 0.000<br>0.000<br>0.000 | 0.020<br>0.000<br>0.000 | 0.078<br>0.000<br>0.000 | 0.323<br>0.037<br>0.000 | |
| Copolymer C auf Basis von Monomer M2 (Vergleichsbeispiel) | 0.030<br>0.050 | 27.5<br>27.0 | 0.000<br>0.000 | 0.056<br>0.000 | 0.128<br>0.128 | 0.428<br>0.287 | $0{,}34 \cdot 10^6$ g/mol |

Das Vergleichsbeispiel Copolymer B basiert auf der Offenbarung der US 8,362,180 (Beispiel in Spalte 27, Zeile 40 bis Spalte 28, Zeile 14 mit Monomer M2).

Eine Dosierung von 0,05 Gew.-% des Copolymers A reicht bereits aus, um eine Sedimentation nach 120 min vollständig zu unterbinden, wobei gleichzeitig ein gutes Fließmaß erreicht werden kann.

Das Molmassenmittel M des Copolymers wurde, wie bereits dargestellt, über die Mark-Houwink Beziehung (1) bestimmt. Die Parameter K und $\alpha$ sind für das vorliegende Polymer-Lösungsmittel-Paar nicht bekannt. Es wurden daher die Parameter für reines Polyacrylamid in Wasser verwendet (nach J. Klein, K-D Conrad, Makromol. Chem. 1980, 18, 227), d.h. K = 0.0049 und $\alpha$ = 0.8.

Für die Bestimmung der intrinsischen Viskosität [$\eta$] wurde eine 0,5 %ige Lösung des Copolymers in Wasser hergestellt. Diese wurde mit einem Puffer (116,66 g NaCl + 32,26 g $Na_2HPO_4$*12$H_2O$ + 1,795 g $Na_2HPO_4$*$H_2O$ in 2 Liter demineralisiertem Wasser) verdünnt, um eine c = 0,01 %ige Polymerlösung zu erhalten. Diese Lösung wurde mit einem Ubbelohde-Viskosimeter (bei 20 °C; Ubbelohde-Kapillare Typ 1) analysiert. Die intrinsische Viskosität wurde über die Durchlaufzeit der 0,01 %igen Polymerlösung bestimmt, wobei als Referenz das Lösungsmittel ohne Polymer verwendet

wurde.

Bestimmt wurde die Durchlaufzeit (t(polymer)) der Polymerlösung im Vergleich zum reinen Lösungsmittel ($t_{LM}$) als Referenz ($\Delta t$ = t(polymer)-$t_{LM}$). Die intrinsische Viskosität [$\eta$] lässt sich hieraus nach Solomon-Ciuta berechnen:

$$[\eta] = \sqrt{2(v_{relativ} - 1) - 2 \ln v_{relativ}} / c$$

$$\text{mit } v_{relativ} = c \times v_{reduziert} + 1$$

$$\text{und } v_{reduziert} = \Delta t / (c \times t_{LM})$$

## Patentansprüche

**1.** Zusammensetzung umfassend

($\alpha$) mindestens ein anorganisches Bindemittel
($\beta$) mindestens ein wasserlösliches Copolymer auf Basis von

(a) 0,1 bis 20 Gew.-% mindestens eines Monomers der Formel (I),

$$H_2C=C(R^1)-R^2-O-(-CH_2-CH_2-O-)_k-(-CH_2-CH(R^3)-O-)_l-(-CH_2-CH_2-O-)_m-R^4 \quad (I)$$

wobei die Einheiten $-(-CH_2-CH_2-O-)_k$, $-(-CH_2-CH(R^3)-O-)_l$ und $-(-CH_2-CH_2-O-)_m$ in Blockstruktur in der in Formel (I) dargestellten Reihenfolge angeordnet sind und die Reste die folgenden Bedeutungen haben:

k: ist eine Zahl von 10 bis 150;
l: ist eine Zahl von 5 bis 25;
m: ist eine Zahl von 1 bis 15;
$R^1$: ist H oder Methyl;
$R^2$: ist unabhängig voneinander eine Einfachbindung oder eine zweiwertige, verknüpfende Gruppe, ausgewählt aus der Gruppe bestehend aus $-(C_nH_{2n})-$ und $-O-(C_{n'}H_{2n'})-$ und $-C(O)-O-(C_{n''}H_{2n''})-$, wobei n, n' und n" für eine natürliche Zahl von 1 bis 6 steht;
$R^3$: ist ein Kohlenwasserstoffrest mit mindestens 2 Kohlenstoffatomen oder eine Ethergruppe der allgemeinen Formel $-CH_2-O-R^{3'}$, wobei $R^{3'}$ für einen Kohlenwasserstoffrest mit mindestens 2 Kohlenstoffatomen steht und wobei $R^3$ innerhalb der Gruppe $-(-CH_2-CH(R^3)-O-)_l$ gleich oder verschieden sein kann;
$R^4$: ist unabhängig voneinander H oder ein Kohlenwasserstoffrest mit 1 bis 4 Kohlenstoffatomen und

(b) 25 bis 99,9 Gew.-% mindestens ein von Monomer (a) verschiedenes monoethylenisch ungesättigtes, hydrophiles Monomer (b),
wobei die Angaben der Gew.-% jeweils auf die Gesamtmenge aller Monomere im Copolymer bezogen sind und das mindestens eine Copolymer ein Molmassenmittel M von 1.500.000 bis 30.000.000 g/mol aufweist, welches nach der Mark-Houwink Beziehung (1) bestimmt wird,

$$M = \left( [\eta] / K \right)^{1/\alpha} \quad (1)$$

wobei K = 0,0049, $\alpha$ = 0,8 und [$\eta$] die intrinsische Viskosität darstellen.

**2.** Zusammensetzung gemäß Anspruch 1, **dadurch gekennzeichnet, dass** es sich bei dem anorganischen Bindemittel um mindestens eines aus der Reihe Calciumsulfat-n-Hydrat, Portlandzement, Weißzement, Calciumaluminatzement, Calciumsulfoaluminatzement, Geopolymer und latent hydraulisches bzw. puzzolanisches Bindemittel handelt.

**3.** Zusammensetzung gemäß Anspruch 1 oder 2, **dadurch gekennzeichnet, dass** der Rest k eine Zahl von 23 bis 26 bedeutet.

**4.** Zusammensetzung gemäß einem der Ansprüche 1 bis 3, **dadurch gekennzeichnet, dass** der Rest l eine Zahl von 8,5 bis 17,25 bedeutet.

**5.** Zusammensetzung gemäß einem der Ansprüche 1 bis 4, **dadurch gekennzeichnet, dass** die Reste folgende Bedeutung haben:

k: ist eine Zahl von 23 bis 26;
l: ist eine Zahl von 12,75 bis 17,25;
m: ist eine Zahl von 2 bis 5;
$R^1$: ist H;
$R^2$: ist eine zweiwertige, verknüpfende Gruppe -O-($C_{n'}H_{2n'}$)-, wobei n' für 4 steht,
$R^3$: ist ein Kohlenwasserstoffrest mit 2 Kohlenstoffatomen;
$R^4$: ist H.

**6.** Zusammensetzung gemäß einem der Ansprüche 1 bis 5, **dadurch gekennzeichnet, dass** es sich bei mindestens einem der Monomere (b) um ein saure Gruppen umfassendes Monomer handelt, wobei es sich bei den sauren Gruppen um mindestens eine Gruppe ausgewählt aus der Gruppe von -COOH, -$SO_3H$ und -$PO_3H_2$, und deren Salze handelt.

**7.** Zusammensetzung gemäß einem der Ansprüche 1 bis 6, **dadurch gekennzeichnet, dass** es mindestens zwei verschiedene monoethylenisch ungesättigte, hydrophile Monomere (b) umfasst, und es sich dabei um

mindestens ein neutrales hydrophiles Monomer (b1), und
mindestens ein hydrophiles anionisches Monomer (b2), welches mindestens eine saure Gruppe ausgewählt aus der Gruppe von -COOH, -$SO_3H$ und -$PO_3H_2$ und deren Salze umfasst, handelt.

**8.** Zusammensetzung gemäß einem der Ansprüche 1 bis 7, **dadurch gekennzeichnet, dass** es sich bei dem mindestens einem Copolymer um ein Copolymer auf Basis von

mindestens einem Monomer (a) der Formel (I), sowie
Acrylamid als neutrales hydrophiles Monomer (b1), und
Acrylamido-2-methylpropansulfonsäure (AMPS) als anionisches hydrophiles Monomer (b2), handelt.

**9.** Zusammensetzung gemäß einem der Ansprüche 1 bis 8, **dadurch gekennzeichnet, dass** die Komponente (β) zusätzlich (c) mindestens ein nichtionische nicht polymerisierbare oberflächenaktive Komponente umfasst.

**10.** Zusammensetzung gemäß einem der Ansprüche 1 bis 9, **dadurch gekennzeichnet, dass** diese bezogen auf deren Trockenmasse mindestens 20 Gew.-% des mindestens einen anorganischen Bindemittels und 0,0005 bis 5 Gew.-% des mindestens einen Copolymers umfasst.

**11.** Verfahren zur Herstellung einer Zusammensetzung nach einem der Ansprüche 1 bis 10, **dadurch gekennzeichnet, dass** das Monomer (a) der allgemeinen Formel (I) durch ein Verfahren umfassend die folgenden Schritte hergestellt wird:

a) Umsetzen eines monoethylenisch ungesättigten Alkohols A1 der allgemeinen Formel (II)

$$H_2C=C(R^1)-R^2-OH \qquad (II),$$

mit Ethylenoxid,
wobei die Reste $R^1$ und $R^2$ die oben definierten Bedeutungen haben;
unter Zugabe eines alkalischen Katalysators K1 enthaltend KOMe und/oder NaOMe; wobei ein alkoxylierter Alkohol A2 erhalten wird;

b) Umsetzen des alkoxylierten Alkohols A2 mit mindestens einem Alkylenoxid Z der Formel (Z)

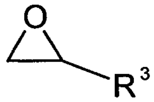 (Z)

wobei $R^3$ die oben definierte Bedeutung hat;
unter Zugabe eines alkalischen Katalysators K2;
wobei die Konzentration an Kalium-Ionen bei der Umsetzung in Schritt b) kleiner oder gleich 0,9 mol-% bezogen auf den eingesetzten Alkohol A2 beträgt;
und wobei die Umsetzung in Schritt b) bei einer Temperatur von kleiner oder gleich 135°C durchgeführt wird, wobei ein alkoxylierter Alkohol A3 gemäß der Formel (III) erhalten wird,

$$H_2C=C(R^1)-R^2O-(-CH_2-CH_2-O-)_k-(-CH_2-CH(R^3)-O-)_l-H \qquad (III)$$

wobei die Reste $R^1$, $R^2$, $R^3$, k und l die oben definierten Bedeutungen haben;

c) Umsetzen des Alkohols A3 mit Ethylenoxid; wobei ein alkoxylierter Alkohol A4 erhalten wird, der dem Monomer (a) gemäß Formel (I) mit $R^4$ = H und m = 1 bis 15 entspricht;
d) optional Verethern des alkoxylierten Alkohols A4 mit einer Verbindung

$R^4$-X

wobei $R^4$ ein Kohlenwasserstoffrest mit 1 bis 4 Kohlenstoffatomen und X eine Abgangsgruppe, bevorzugt ausgewählt aus der Gruppe von Cl, Br, I, $-O-SO_2-CH_3$ (Mesylat), $-O-SO_2-CF_3$ (Triflat) und $-O-SO_2-OR^4$ ist; wobei ein Monomer (a) gemäß Formel (I) mit $R^4$ = Kohlenwasserstoffrest mit 1 bis Kohlenstoffatomen erhalten wird,

radikalische Polymerisation des erhaltenen Monomeren (a) mit einem Monomeren (b), wobei das wasserlösliche Copolymer (β) erhalten wird und in Kontakt bringen des wasserlöslichen Copolymers (β) mit dem mindestens einem anorganischen Bindemittel.

**12.** Verfahren zur Herstellung einer Zusammensetzung nach einem der Ansprüche 1 bis 10, **dadurch gekennzeichnet, dass** zur Herstellung des Copolymers mindestens ein Monomer (a) und mindestens ein hydrophiles Monomer (b) einer wässrigen Lösungspolymerisation unterzogen werden und in Kontakt bringen des erhaltenen wasserlöslichen Copolymers (β) mit dem mindestens einem anorganischen Bindemittel.

**13.** Verfahren nach Anspruch 12, **dadurch gekennzeichnet, dass** die Lösungspolymerisation bei einem pH-Wert im Bereich von 5,0 bis 9 durchgeführt wird.

**14.** Verfahren nach Anspruch 12 oder 13, **dadurch gekennzeichnet, dass** die Lösungspolymerisation in Gegenwart mindestens einer oberflächenaktiven Komponente (c) durchgeführt wird.

**15.** Verwendung des Copolymers der Komponente (β) in einer Zusammensetzung nach einem der Ansprüche 1 bis 10, als rheologisches Additiv.

## Claims

**1.** Composition comprising

(a)α at least one inorganic binder
(β) at least one water-soluble copolymer based on

(a) 0.1 to 20 wt% of at least one monomer of the formula (I),

$$H_2C=C(R^1)\text{-}R^2\text{-}O\text{-}(\text{-}CH_2\text{-}CH_2\text{-}O\text{-})_k\text{-}(\text{-}CH_2\text{-}CH(R^3)\text{-}O\text{-})_1\text{-}(\text{-}CH_2\text{-}CH_2\text{-}O\text{-})_m\text{-}R^4 \quad \text{(I)}$$

where the units $-(-CH_2-CH_2-O-)_k$, $-(-CH_2-CH(R^3)-O-)_l$ and - $(-CH_2-CH_2-O-)_m$ are arranged in a block structure in the order shown in formula (I) and the indices and radicals have the following meanings:

k: is from 10 to 150;
l: is from 5 to 25;
m: is from 1 to 15;
$R^1$: is H or methyl;
$R^2$: is, each independently of one another, a single bond or a divalent, linking group selected from the group consisting of $-(C_nH_{2n})-$ and $-O-(C_{n'}H_{2n'})-$ and $-C(O)-O-(C_{n''}H_{2n''})-$, where n, n' and n" are each a natural number from 1 to 6;
$R^3$: is a hydrocarbon radical having at least 2 carbon atoms or an ether group of the general formula $-CH_2-OR^{3'}$, where $R^{3'}$ is a hydrocarbon radical having at least 2 carbon atoms and where $R^3$ can be identical or different within the group $-(-CH_2-CH(R^3)-O-)_l$;
$R^4$: is, each independently of one another, H or a hydrocarbon radical having 1 to 4 carbon atoms, and

(b) 25 to 99.9 wt% of at least one monoethylenically unsaturated hydrophilic monomer (b) different from monomer (a),

where the wt% figures are in each case based on the total amount of all monomers in the copolymer and the at least one copolymer has a molar mass average M of 1 500 000 to 30 000 000 g/mol, which is determined according to the Mark-Houwink relationship (1),

$$M = \left(\frac{[\eta]}{K}\right)^{1/\alpha} \quad (1)$$

where K = 0.0049, $\alpha$ = 0.8 and $[\eta]$ represents the intrinsic viscosity.

**2.** Composition according to Claim 1, **characterized in that** the inorganic binder is at least one from the series calcium sulfate n-hydrate, Portland cement, white cement, calcium aluminate cement, calcium sulfoaluminate cement, geopolymer, and latent hydraulic and/or pozzolanic binder.

**3.** Composition according to Claim 1 or 2, **characterized in that** the index k is from 23 to 26.

**4.** Composition according to any of Claims 1 to 3, **characterized in that** the index 1 is from 8.5 to 17.25.

**5.** Composition according to any of Claims 1 to 4, **characterized in that** the radicals and indices have the following meaning:

k: is from 23 to 26;
l: is from 12.75 to 17.25;
m: is from 2 to 5;
$R^1$: is H;
$R^2$: is a divalent, linking group $-O-(C_{n'}H_{2n'})-$, where n' is 4,
$R^3$: is a hydrocarbon radical having 2 carbon atoms;
$R^4$: is H.

**6.** Composition according to any of Claims 1 to 5, **characterized in that** at least one of the monomers (b) is a monomer comprising acid groups, the acid groups comprising at least one group selected from the group of -COOH, $-SO_3H$ and $-PO_3H_2$ and salts thereof.

7. Composition according to any of Claims 1 to 6, **characterized in that** it comprises at least two different monoethylenically unsaturated hydrophilic monomers (b), namely

at least one neutral hydrophilic monomer (b1), and
at least one hydrophilic anionic monomer (b2) which comprises at least one acid group selected from the group of -COOH,-$SO_3H$ and -$PO_3H_2$ and salts thereof.

8. Composition according to any of Claims 1 to 7, characterized that the at least one copolymer is a copolymer based on at least one monomer (a) of the formula (I), and also acrylamide as neutral hydrophilic monomer (b1), and acrylamido-2-methylpropanesulfonic acid (AMPS) as anionic hydrophilic monomer (b2).

9. Composition according to any of Claims 1 to 8, **characterized in that** the component (β) additionally comprises (c) at least one nonionic, nonpolymerizable, surface active component.

10. Composition according to any of Claims 1 to 9, **characterized in that** it comprises, based on its dry mass, at least 20 wt% of the at least one inorganic binder and 0.0005 to 5 wt% of the at least one copolymer.

11. Process for producing a composition according to any of Claims 1 to 10, **characterized in that** the monomer (a) of the general formula (I) is prepared by a process comprising the following steps:

a) reaction of a monoethylenically unsaturated alcohol Al of the general formula (II)

$$H_2C=C(R^1)-R^2-OH \quad (II),$$

with ethylene oxide,
where the radicals $R^1$ and $R^2$ are as defined above;
with addition of an alkaline catalyst K1 containing KOMe and/or NaOMe, giving an alkoxylated alcohol A2;

b) reaction of the alkoxylated alcohol A2 with at least one alkylene oxide Z of the formula (Z)

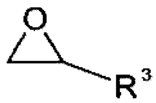
(Z)

where $R^3$ is as defined above;
with addition of an alkaline catalyst K2;
where the concentration of potassium ions in the reaction in step b) is less than or equal to 0.9 mol%, based on the alcohol A2 used;
and where the reaction in step b) is carried out at a temperature of less than or equal to 135°C,
giving an alkoxylated alcohol A3 of the formula (III),

$$H_2C=C(R^1)-R^2-O-(-CH_2-CH_2-O-)_K-(-CH_2-CH(R^3)-O-)_l-H \quad (III)$$

where the radicals and indices $R^1$, $R^2$, $R^3$, k and l are as defined above;

c) reaction of the alcohol A3 with ethylene oxide, giving an alkoxylated alcohol A4 corresponding to the monomer (a) of the formula (I) with $R^4$ = H and m = 1 to 15;
d) optional etherification of the alkoxylated alcohol A4 with a compound

$$R^4-X$$

where $R^4$ is a hydrocarbon radical having 1 to 4 carbon atoms and X is a leaving group, preferably selected from the group of Cl, Br, I, -O-$SO_2$-$CH_3$ (mesylate), -O-$SO_2$-$CF_3$ (triflate) and -O-$SO_2$-$OR^4$,

giving a monomer (a) of the formula (I) where $R^4$ = hydrocarbon radical having 1 to 4 carbon atoms, radical polymerization of the resulting monomer (a) with a monomer (b), giving the water-soluble copolymer ($\beta$), and contacting of the water-soluble copolymer ($\beta$) with the at least one inorganic binder.

**12.** Process for producing a composition according to any of Claims 1 to 10, **characterized in that** the copolymer is prepared by subjecting at least one monomer (a) and at least one hydrophilic monomer (b) to an aqueous solution polymerization and contacting the resulting water-soluble copolymer ($\beta$) with the at least one inorganic binder.

**13.** Process according to Claim 12, **characterized in that** the solution polymerization is carried out at a pH in the range from 5.0 to 9.

**14.** Process according to Claim 12 or 13, **characterized in that** the solution polymerization is carried out in the presence of at least one surface-active component (c).

**15.** Use of the copolymer of component ($\beta$) as rheological additive in a composition according to any of Claims 1 to 10.

## Revendications

**1.** Composition, comprenant :

($\alpha$) au moins un liant organique
($\beta$) au moins un copolymère soluble dans l'eau à base de

(a) 0,1 à 20% en poids d'au moins un monomère de formule (I),

$$H_2C=C(R^1)-R^2-O-(-CH_2-CH_2-O-)_k-(-CH_2-CH(R^3)-O-)_1-(-CH_2-CH_2-O-)_m-R^4$$

(I)

les motifs $-(-CH_2-CH_2-O-)_k$, $-(-CH_2-CH(R^3)-O-)_l$ et $-(-CH_2-CH_2-O-)_m$ étant disposés en structure de bloc dans l'ordre représenté dans la formule (I) et les radicaux présentant les significations suivantes :

k : représente un nombre de 10 à 150 ;
l : représente un nombre de 5 à 25 ;
m : représente un nombre de 1 à 15 ;
$R^1$ : représente H ou méthyle ;
$R^2$ : représente, indépendamment, une simple liaison ou un

groupe bivalent de liaison, choisi dans le groupe constitué par $-(C_nH_{2n})-$ et $-O-(C_{n'}H_{2n'})-$ et $-C(O)-O-(C_{n''}H_{2n''})-$, n, n' et n" représentant un entier naturel de 1 à 6 ;
$R^3$ : représente un radical hydrocarboné comprenant au moins 2 atomes de carbone ou un groupe éther de formule générale $-CH_2-O-R^{3'}$, $R^{3'}$ représentant un radical hydrocarboné comprenant au moins 2 atomes de carbone et $R^3$ au sein du groupe $-(-CH_2-CH(R^3)-O-)_l$ pouvant être identique ou différent ;
$R^4$ : représente, indépendamment, H ou un radical hydrocarboné comprenant 1 à 4 atomes de carbone et

(b) 25 à 99,9% en poids d'au moins un monomère (b) hydrophile, éthyléniquement mono-insaturé, différent du monomère (a),

les indications des % en poids se rapportant à chaque fois à la quantité totale de tous les monomères dans le copolymère et ledit au moins un copolymère présentant une masse molaire moyenne M de 1.500.000 à 30.000.000 g/mole, déterminée selon la relation de Mark-Houwink (1),

$$M = \left( {[\eta]}/{K} \right)^{1/\alpha} \qquad (1)$$

dans laquelle K = 0,0049, $\alpha$ = 0,8 et $[\eta]$ représente la viscosité intrinsèque.

**2.** Composition selon la revendication 1, **caractérisée en ce qu'**il s'agit, pour le liant inorganique, d'au moins un liant de la série sulfate de calcium n hydraté, ciment Portland, ciment blanc, ciment d'aluminate de calcium, ciment de sulfoaluminate de calcium, géopolymère et liant hydraulique ou, selon le cas, pouzzolanique latent.

**3.** Composition selon la revendication 1 ou 2, **caractérisée en ce que** le radical k signifie un nombre de 23 à 26.

**4.** Composition selon l'une des revendications 1 à 3, **caractérisée en ce que** le radical l signifie un nombre de 8,5 à 17,25.

**5.** Composition selon l'une des revendications 1 à 4, **caractérisée en ce que** les radicaux présentent la signification suivante :

k : représente un nombre de 23 à 26 ;
l : représente un nombre de 12,75 à 17,25 ;
m : représente un nombre de 2 à 5 ;
$R^1$ : représente H ;
$R^2$ : représente un groupe bivalent de liaison $-O-(C_{n'}H_{2n'})-$, n' représentant 4,
$R^3$ : représente un radical hydrocarboné comprenant 2 atomes de carbone ;
$R^4$ : représente H.

**6.** Composition selon l'une des revendications 1 à 5, **caractérisée en ce qu'**il s'agit, pour au moins l'un des monomères (b), d'un monomère comprenant des groupes acides, les groupes acides étant au moins un groupe choisi dans le groupe formé par $-COOH$, $-SO_3H$ et $-PO_3H_2$ et leurs sels.

**7.** Composition selon l'une des revendications 1 à 6, **caractérisée en ce qu'**elle comprend au moins deux monomères (b) hydrophiles, éthyléniquement monoinsaturés différents et où il s'agit

d'au moins un monomère (b1) hydrophile neutre et
d'au moins un monomère (b2) hydrophile anionique, qui comprend au moins un groupe acide choisi dans le groupe formé par $-COOH$, $-SO_3H$ et $-PO_3H_2$ et leurs sels.

**8.** Composition selon l'une des revendications 1 à 7, **caractérisée**

**en ce qu'**il s'agit, pour ledit au moins un copolymère, d'un copolymère à base
d'au moins un monomère (a) de formule (I) ainsi que d'acrylamide en tant que monomère (b1) hydrophile neutre et
d'acide acrylamido-2-méthylpropanesulfonique (AMPS) en tant que monomère (b2) hydrophile anionique.

**9.** Composition selon l'une des revendications 1 à 8, **caractérisée en ce que** le composant ($\beta$) comprend en plus (c) au moins un composant tensioactif non polymérisable non ionique.

**10.** Composition selon l'une des revendications 1 à 9, **caractérisée en ce qu'**elle comprend, par rapport à sa masse sèche, au moins 20% en poids dudit au moins un liant inorganique et 0,0005 à 5% en poids dudit au moins un copolymère.

**11.** Procédé de préparation d'une composition selon l'une des revendications 1 à 10, **caractérisé en ce que** le monomère (a) de formule générale (I) est préparé par un procédé comprenant les étapes suivantes :

a) transformation d'un alcool A1 éthyléniquement mono-insaturé de formule générale (II)

$$H_2C{=}C(R^1){-}R^2{-}OH \qquad (II),$$

avec de l'oxyde d'éthylène,
les radicaux $R^1$ et $R^2$ présentant les significations définies ci-dessus ;

avec ajout d'un catalyseur alcalin K1 contenant KOMe et/ou NaOMe ; un alcool A2 alcoxylé étant obtenu ;

b) transformation de l'alcool A2 alcoxylé avec au moins un oxyde d'alkylène Z de formule (Z)

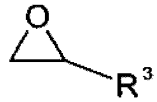

(Z)

$R^3$ présentant la signification définie ci-dessus ;
avec ajout d'un catalyseur alcalin K2 ;
la concentration en ions potassium lors de la transformation dans l'étape b) étant inférieure ou égale à 0,9% en mole, par rapport à l'alcool A2 utilisé ;
et la transformation dans l'étape b) est réalisée à une température inférieure ou égale à 135°C,
un alcool A3 alcoxylé selon la formule (III) étant obtenu,
$H_2C=C(R^1)-R^2-O-(-CH_2-CH_2-O-)_K-(-CH_2-CH(R^3)-O-)_l-H$ (III) les radicaux $R^1$, $R^2$, $R^3$, k et l présentant les significations définies ci-dessus ;

c) transformation de l'alcool A3 avec de l'oxyde d'éthylène ; un alcool A4 alcoxylé étant obtenu, qui correspond au monomère (a) selon la formule (I) dans laquelle $R^4$ = H et m = 1 à 15 ;
d) éventuellement éthérification de l'alcool A4 alcoxylé avec un composé

$R^4$-X

dans laquelle $R^4$ représente un radical hydrocarboné comprenant 1 à 4 atomes de carbone et X représente un groupe partant, de préférence choisi dans le groupe formé par Cl, Br, I, $-O-SO_2-CH_3$ (mésylate), $-O-SO_2-CF_3$ (triflate) et $-O-SO_2-OR^4$ ;
un monomère (a) selon la formule (I) dans laquelle $R^4$ = radical hydrocarboné comprenant 1 à 4 atomes de carbone étant obtenu,
polymérisation radicalaire du monomère (a) obtenu avec un monomère (b), le copolymère (β) soluble dans l'eau étant obtenu et mise en contact du copolymère (β) soluble dans l'eau avec ledit au moins un liant organique.

**12.** Procédé de préparation d'une composition selon l'une des revendications 1 à 10, **caractérisé en ce que**, pour la préparation du copolymère, au moins un monomère (a) et au moins un monomère (b) hydrophile sont soumis à une polymérisation en solution aqueuse et le copolymère (β) soluble dans l'eau obtenu est mis en contact avec ledit au moins un liant inorganique.

**13.** Procédé selon la revendication 12, **caractérisé en ce que** la polymérisation en solution est réalisée à un pH dans la plage de 5,0 à 9.

**14.** Procédé selon la revendication 12 ou 13, **caractérisé en ce que** la polymérisation en solution est réalisée en présence d'au moins un composant tensioactif (c).

**15.** Utilisation du copolymère du composant (β) dans une composition selon l'une des revendications 1 à 10 en tant qu'additif rhéologique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 705854 A1
- DE 10037629 A1
- DE 102004032304 A1
- US 8362180 B
- WO 2004099100 A
- WO 2011133527 A
- WO 2009019225 A
- US 4349386 A
- WO 8503699 A
- US 4472199 A


### In der Beschreibung aufgeführte Nicht-Patentliteratur


- Ullmann's Enzyklopädie der Technischen Chemie. Verlag Chemie Weinheim, vol. 9, 208-210
- **ROUSSEL, N. et al.** *Cement and Concrete Research*, 2005, vol. 35 (5), 817-822
- **A. PERROT et al.** *Cement and Concrete Research*, 2012, vol. 42, 937-944
- **J. KLEIN** ; **K-D CONRAD**. *Makromol. Chem.*, 1980, vol. 18, 227